# EUROPÄISCHE PATENTSCHRIFT

(11) **EP 2 055 472 B1**
(45) Veröffentlichungstag und Bekanntmachung des Hinweises auf die Patenterteilung: **13.10.2010**
(21) Anmeldenummer: 07119459.1
(22) Anmeldetag: 29.10.2007
(51) Int. Cl.: B31D 1/02, B65C 9/18

(54) **Verfahren zur Herstellung von Bandware mit diagnostischen Hilfsmitteln**
Method for manufacturing spooled products with diagnostic aids
Procédé de fabrication de rubans avec ressources diagnostiques

(43) Veröffentlichungstag der Anmeldung: 06.05.2009
(73) Patentinhaber: F. Hoffmann-La Roche AG, 4070 Basel (CH); Roche Diagnostics GmbH, 68305 Mannheim (DE)
(72) Erfinder: Dagenbach, Ralf, 68723 Schwetzingen (DE); Aigl, Daniel, 68535 Edingen-Neckarhausen (DE); Ditscher, Wolfgang, 67691 Hochspeyer (DE); Hofstadt, Ronald, 67459 Boehl-Iggelheim (DE); Krontal, Andreas, 69126 Heidelberg (DE); Link, Stefan, 64625 Bensheim-Schwanheim (DE); Lurg, Klaus, 68642 Bürstadt (DE); Pflaesterer, Stefan, 69469 Weinheim (DE); Sprung, Ulf, 73271 Holzmaden (DE); Stubenbord, Peter, 67141 Neuhofen (DE); Trapp, Andreas, 68623 Lampertheim (DE); Vetter, Peter, 67071 Ludwigshafen (DE); Voelschow, Eric, 68307 Mannheim (DE)
(74) Vertreter: Stößel, Matthias

(56) Entgegenhaltungen:
- EP-A- 1 593 434
- EP-A- 1 837 170
- WO-A-2005/115849
- US-A- 2007 252 700
- US-A1- 2003 111 184

## Beschreibung

### Gebiet der Erfindung

Die Erfindung betrifft ein Verfahren zur Herstellung eines Analysebandes für Flüssigkeitsproben, insbesondere Körperflüssigkeiten. Die Erfindung betrifft weiterhin eine Vorrichtung zur Herstellung eines Analysebandes für Flüssigkeitsproben, insbesondere unter Verwendung eines erfindungsgemäßen Verfahrens. Derartige Verfahren und Vorrichtungen werden allgemein eingesetzt, um Bandware herzustellen, welche diagnostische Hilfsmittel, beispielsweise diagnostische Hilfsmittel für einen einmaligen Gebrauch, umfasst. Derartige diagnostische Hilfsmittel können insbesondere ein oder mehrere Testfelder mit einer Nachweischemie und/oder Lanzetten zum Gewinnen einer Flüssigkeitsprobe einer Körperflüssigkeit umfassen, wie sie beispielsweise im Rahmen der Diabetes-Diagnostik eingesetzt werden. Auch andere Anwendungsgebiete sind jedoch denkbar.

### Stand der Technik

Die Untersuchung von Blutproben oder anderen Proben von Körperflüssigkeit, wie beispielsweise von interstitieller Flüssigkeit, ermöglichen in der klinischen Diagnostik das frühzeitige und zuverlässige Erkennen von pathologischen Zuständen sowie die gezielte und fundierte Kontrolle von Körperzuständen. Die medizinische Diagnostik setzt in der Regel die Gewinnung einer Probe aus Blut oder interstitielle Flüssigkeit des zu untersuchenden Patienten voraus. Zur Gewinnung der Probe kann die Haut der zu untersuchenden Person, beispielsweise an der Fingerbeere oder dem Ohrläppchen, mit Hilfe einer sterilen, spitzen oder scharfen Lanzette perforiert werden, um so einige wenige Mikroliter Blut oder weniger für die Analyse zu gewinnen. Insbesondere eignet sich diese Methode für eine Analyse der Probe, die unmittelbar nach der Probengewinnung durchgeführt wird. Vor allem im Bereich des sog. "Home Monitoring", also dort, wo medizinische Laien selbst einfache Analysen des Blutes oder der interstitiellen Flüssigkeit durchführen, dort insbesondere für die regelmäßige, mehrmals täglich durchzuführende Blutgewinnung durch Diabetiker für die Kontrolle der Blutglukosekonzentration, werden Lanzetten und dazu passende Geräte (sog. Stechhilfen) angeboten, welche beispielsweise in WO-A 98/48695, US 4,442,836, US 5,554,166 oder WO 2006/013045 A1 beschrieben sind.

Die eigenhändige Blutzuckerbestimmung ist heute eine weltweit verbreitete Methode in der Diabetes-Kontrolle. Blutzuckergeräte im Stand der Technik weisen in der Regel ein Analysegerät auf, in das ein Testelement (z.B. ein Teststreifen) eingebracht wird. Die zu analysierende Probe wird auf ein Testfeld eines Testelements aufgebracht und reagiert in dem Testfeld ggf. mit einer oder mehreren Reagenzien, bevor sie analysiert wird. Die optische, insbesondere photometrische, und die elektrochemische Auswertung von Testelementen stellen die gebräuchlichsten Verfahren zur schnellen Bestimmung der Konzentration von Analyten in Proben dar. Analysesysteme mit Testelementen zur Probenanalyse werden allgemein im Bereich der Analytik, der Umweltanalytik und vor allem im Bereich der medizinischen Diagnostik eingesetzt. Insbesondere im Bereich der Blutglukosediagnostik aus Kapillarblut besitzen Testelemente, die photometrisch oder elektrochemisch ausgewertet werden, einen großen Stellenwert.

Aus dem Stand der Technik sind verschiedene Formen von Testelementen und Testgeräte zur deren Auswertung bekannt. Beispielsweise lassen sich streifenförmige Testelemente einsetzen, wie sie z.B. in den Dokumenten CA 2311496 A1, US 5,846,838 A, US 6,036, 919 A oder WO 97/02487 beschrieben sind. Weitere im Stand der Technik bekannte mehrschichtige Testelemente sind Analysebänder mit einer Vielzahl von Testfeldern, die in einer Kassette aufgewickelt zur Verwendung in einem Analysegerät bereitgestellt werden. Solche Kassetten und Analysebänder werden z.B. in den Dokumenten DE 10332488 A1, DE 10343896 A1, EP 1 424 040 A1, WO 2004/056269 A1 und US 2006/0002816 A1 beschrieben. Neben Analysebändern mit Testfeldern sind mittlerweile auch Analysebänder bekannt, bei welchen Lanzetten auf einem Trägerband angeordnet sind, wobei sich die einzelnen Lanzetten durch Bandtransport sukzessive zum Einsatz bringen und auch wieder entsorgen lassen. Ein Beispiel eines derartigen Systems ist in WO-A 2005/107596 gezeigt. Im Folgenden wird daher unter einem "Analyseband" ein Band mit einer beliebigen Art diagnostischer Hilfsmittel verstanden, wobei die diagnostischen Hilfsmittel eine beliebige Art diagnostischer Hilfsmittel umfassen können, beispielsweise diagnostische Testfelder mit einer Nachweischemie und/oder Lanzetten.

Zur Herstellung der Analysebänder sind verschiedene Verfahren bekannt. Diese Verfahren müssen zahlreichen strengen Anforderungen genügen, da im Bereich der medizinischen Diagnostik strenge Erfordernisse beispielsweise an die Kontaminationsfreiheit der Analysebänder gestellt werden sowie hohe Anforderungen an die Qualität und die Reproduzierbarkeit der auf den Analysebändern aufgebrachten diagnostischen Hilfsmittel. Gleichzeitig müssen die Analysebänder jedoch kostengünstig hergestellt werden, da die medizinische Diagnostik unter einem stetig wachsenden Kostendruck steht.

Aus EP 1 593 434 A2 sind ein Verfahren und eine Vorrichtung zur Herstellung eines Analysebandes für Flüssigkeitsproben bekannt. Dabei wird ein aufrollbares Transportband mit einer Vielzahl von in Bandrichtung im Abstand von einander befindlichen Testfeldern zur Analyse der Flüssigproben versehen, wobei ein mehrlagiges Testetikettenband zumindest aus einem Nachweisfilm und einem Klebband vorgefertigt wird und anschließend die Testfelder als selbstklebende Testetiketten von dem Testetikettenband auf das Transportband übertragen werden. Hierzu wird vorgeschlagen, ein Vielspur-Etikettenband durch Stanzen und Abziehen eines Stanzgitters abschnittsweise in Vielfach-Testetiketten zu unterteilen, welche anschließend in einem Etikettierverfahren auf das Transportband übertragen werden.

Dieses bekannte Verfahren ermöglicht eine kostengünstige und präzise Herstellung von Analysebändern hoher Qualität. Dabei hat es sich im praktischen Einsatz jedoch gezeigt, dass das in EP 1 593 434 A2 beschriebene Analyseverfahren vom Durchsatz her beschränkt ist, sodass es bei Bandgeschwindigkeiten des Trägerbandes von mehreren 10 m/min zu Toleranzen in der Etikettierung kommen kann, welche die vorgegebenen Maximaltoleranzen überschreiten.

Ein weiterer Nachteil der bekannten Etikettierverfahren, wie beispielsweise dem aus EP 1 593 434 A2 bekannten Verfahren, besteht darin, das bei der Etikettierung ein hoher Ausschuss entsteht. So ist beispielsweise das in EP 1 593 434 A2 beschriebene Stanzen und Abziehen des Stanzgitters mit einem erheblichen Ausschuss verbunden, was angesichts der Hochwertigkeit der eingesetzten Testchemie und des komplexen Aufbaus des verwendeten Vielspur-Etikettenbandes die Herstellungskosten erheblich steigert.

EP 1837170 und US 2003/0111184 offenbaren ein Etikettierverfahren und -vorrichtung, bei den ein Laminatband derart geschnitten wird, dass ein diagnostiches Hilfsetikett entsteht, das Etikett auf eine Vakuumwalze und auf ein Trägerband übertragen wird.

### Aufgabe der Erfindung

Aufgabe der vorliegenden Erfindung ist es daher, ein Verfahren zur Herstellung eines Analysebandes sowie eine entsprechend Vorrichtung bereitzustellen, welche die Nachteile bekannter Verfahren und Vorrichtungen vermeiden. Insbesondere soll sich das Verfahren für eine Herstellung mit hohem Durchsatz eignen, wobei auch bei hohen Durchsätzen eine gute Präzision und geringe Fehlertoleranz erreicht wird.

### Beschreibung der Erfindung

Diese Aufgabe wird durch ein Verfahren und eine Vorrichtung mit den Merkmalen der unabhängigen Ansprüche gelöst. Vorteilhafte Weiterbildungen der Erfindung, welche einzeln oder in Kombination realisiert werden können, sind in den abhängigen Patentansprüchen dargestellt. Sämtliche Ansprüche werden hiermit zum Inhalt der Beschreibung gemacht.

Es wird ein Verfahren zur Herstellung eines Analysebandes für Flüssigkeitsproben, insbesondere Körperflüssigkeiten, vorgeschlagen. Das Analyseband soll mindestens eine diagnostische und/oder therapeutische Funktion aufweisen und kann zu diesem Zweck insbesondere mindestens ein diagnostisches Hilfsmittel umfassen. Insbesondere kann es sich bei diesem diagnostischen Hilfsmittel um ein diagnostisches Testfeld mit einer Nachweischemie handeln, welche eingerichtet ist, um einen oder mehrere Analyten in der Flüssigkeitsprobe nachzuweisen. Beispielsweise kann die Testchemie mindestens eine nachweisbare physikalische und/oder chemische Eigenschaft ändern, wenn diese in Kontakt mit dem nachzuweisenden Analyten gerät. Insbesondere kann es sich um eine optisch nachweisbare Eigenschaft (beispielsweise eine Farbänderung und/oder eine Änderung einer Fluoreszenzeigenschaft) und/oder eine elektrochemisch nachweisbare Eigenschaft handeln.

Alternativ oder zusätzlich kann das mindestens eine diagnostische Hilfsmittel weiterhin eine Lanzette umfassen, welche eingerichtet ist, um zur Erzeugung einer Flüssigkeitsprobe eine Hautpartie eines Patienten zu perforieren. Dabei können aus dem Stand der Technik bekannte Testfelder und Nachweischemien (beispielsweise gemäß dem oben beschriebenen Stand der Technik) und/oder aus dem Stand der Technik bekannte Lanzettenarten (beispielsweise gemäß dem oben beschriebenen Stand der Technik) zum Einsatz kommen. Es können Analysebänder eingesetzt werden, welche ausschließlich diagnostische Testfelder und/oder ausschließlich Lanzetten umfassen, wobei die Testfelder und/oder Lanzetten beispielsweise in regelmäßigen Abständen auf einem Trägerband angeordnet sein können. Es sind jedoch auch Analysebänder denkbar, welche Testfelder und Lanzetten umfassen, welche beispielsweise alternierend angeordnet sind. Auf diese Weise kann beispielsweise mittels des Analysebandes zunächst unter Verwendung einer Lanzette eine Blutprobe oder eine andere Probe einer Körperflüssigkeit generiert werden, wonach diese Flüssigkeitsprobe beispielsweise unter zu Hilfenahme eines sich an die Lanzette auf dem Trägerband anschließenden Testfeldes analysiert werden kann.

Bei dem vorgeschlagenen Verfahren wird als Halbfertigprodukt ein Laminatband eingesetzt, welches mindestens ein Laminatträgerband und mindestens eine diagnostische Funktionsschicht umfasst. Das Laminatträgerband, welches beispielsweise ein Papierband und/oder ein Kunststoffband und/oder ein mehrlagiges Trägerband umfassen kann, dient lediglich als Transportmittel der eigentlichen diagnostischen Funktionsschicht und kann anschließend beispielsweise entsorgt oder wiederverwendet werden. Die diagnostische Funktionsschicht ist an die Art der aufzubringenden diagnostischen Hilfsmittel angepasst und kann beispielsweise eine Vielzahl von Lanzetten und/oder mindestens eine Nachweischemie umfassen. In letzterem Fall kann die diagnostische Funktionsschicht beispielsweise ausgestaltet sein, wie in EP 1 593 434 A2 beschrieben und kann beispielsweise die Testchemie in Form eines Nachweisfilms umfassen. Zusätzlich kann die diagnostische Funktionsschicht weitere Schichten umfassen, wie beispielsweise Klebeschichten (welche vorzugsweise in diesem Fall zwischen Lanzette und/oder Testchemie und dem Laminatträgerband angeordnet sind), saugfähige Decklagen (beispielsweise Spriting-Schichten) und/oder hydrophilisierende und/oder hydrophobisierende Imprägnierungen. Auch weitere Schichten, beispielsweise Versiegelungsschichten für Lanzetten oder ähnliches, können umfasst sein.

Bei der vorliegenden Erfindung werden die diagnostischen Hilfsmittel in Form von diagnostischen Hilfsetiketten in einem Rollenverfahren auf das Trägerband übertragen, beispielsweise ähnlich zu dem in EP 1 593 434 A2 beschriebenen Verfahren. Hierzu wird die mindestens eine diagnostische Funktionsschicht des Laminatbandes zunächst derart geschnitten, dass ein diagnostisches Hilfsetikett entsteht. Dieses diagnostische Hilfsetikett kann beispielsweise den Testetiketten der EP 1 593 434 A2 entsprechen und kann beispielsweise ein selbstklebendes Hilfsetikett sein.

Im Unterschied zur EP 1 593 434 A2 wird jedoch vorgeschlagen, die Übertragung der diagnostischen Hilfsetiketten auf das Trägerband dadurch zu verbessern, dass mindestens eine Vakuumwalze eingesetzt wird. Unter einer Vakuumwalze wird dabei eine Walze verstanden, welche (z.B. durch eine bzw. mehrere umfangsseitig auf der Walze angeordnete Saugöffnungen) ein Hilfsetikett anzusaugt und durch Drehung der Vakuumwalze vom Laminatband zum Trägerband transportiert. Um die Hilfsetiketten anschließend wieder freizugeben und auf das Trägerband zubringen, können beispielsweise Adhäsionskräfte zwischen dem Hilfsetikett und dem Trägerband genutzt werden. Handelt es sich beispielsweise um selbstklebende Hilfsetiketten, so können diese Adhäsionskräfte größer sein als die Saugkräfte der Vakuumwalze, sodass die Hilfsetiketten von der Vakuumwalze freigegeben und auf das Trägerband aufgebracht werden.

Alternativ oder zusätzlich kann die Vakuumwalze jedoch auch derart ausgestaltet sein, dass beispielsweise im Bereich des Umfangsegmentes der Vakuumwalze, in welcher die Aufbringung der Hilfsetiketten auf das Trägerband erfolgt, die Ansaugung der Hilfsetiketten gestoppt wird. Dies kann beispielsweise dadurch erfolgen, dass die Beaufschlagung der Ansaugöffnungen mit Vakuum in diesem Bereich unterbrochen wird, oder es kann sogar in diesem Umfangsbereich gezielt eine Beaufschlagung mit Überdruck erfolgen, beispielsweise mit Druckluft.

Vakuumwalzen sind aus anderen Bereichen der Technik, in welchen nicht-medizinische Produkte hergestellt werden, bekannt. So beschreibt beispielsweise US 6,206,071 B1 eine Vorrichtung, welche einen "liner" von Etiketten entfernt und diese Etiketten auf Produkte aufbringt. Dabei wird eine Vakuumwalze eingesetzt. Auch WO 99/03738 beschreibt Vakuumwalzen (dort als Transferzylinder bezeichnet) für den Einsatz in Etikettiermaschinen. Für mögliche Ausgestaltungen der Vakuumwalze im Rahmen der vorliegenden Erfindung kann daher auf diese beiden Schriften verwiesen werden. Auch andere Arten der Ausgestaltung der Vakuumwalzen sind jedoch denkbar und im Rahmen der vorliegenden Erfindung einsetzbar.

Im Rahmen zahlreicher Tests hat es sich gezeigt, dass die erfindungsgemäße Idee der Verwendung mindestens einer Vakuumwalze für die Übertragung der Hilfsetiketten auf das Trägerband erhebliche Vorteile hinsichtlich der Präzision der Aufbringung der Hilfsetiketten bietet. Während übliche Etikettierverfahren lediglich langsame Bandgeschwindigkeiten ermöglichen, ist es mittels des erfindungsgemäßen Verfahren möglich, Bandgeschwindigkeiten im Bereich mehrerer 10 m/min und Etikettierraten von bis zu 500 Etiketten/min oder mehr zu erreichen, wobei Toleranzen im Sub-Millimeterbereich (beispielsweise von maximal 0,5 mm) erreichbar sind. Somit wird durch das erfindungsgemäße Verfahren der Durchsatz erhöht, Kosten werden gesenkt, und gleichzeitig wird eine hohe Qualität der erzeugten Analysebänder gewahrt bzw. sichergestellt.

Neben dem beschriebenen Verfahren wird eine Vorrichtung zur Herstellung eines Analysebandes gemäß der obigen Beschreibung vorgeschlagen, welche insbesondere zur Umsetzung des beschriebenen Verfahrens oder eines Verfahrens in einer der im nachfolgenden beschriebenen Abwandlungen geeignet sein kann. Insofern kann für mögliche Ausgestaltungen weitgehend auf die obige und nachfolgende Beschreibung verwiesen werden, wobei die Vorrichtung jeweils entsprechende Einrichtungen zur Umsetzung dieser einzelnen optionalen Verfahrensschritte umfassen kann.

Die Vorrichtung umfasst eine Etikettiereinrichtung, einen Laminatantrieb für eine Zufuhr des Laminatbandes zu der Etikettiereinrichtung, eine Schneidvorrichtung zum Schneiden des Laminatbandes, insbesondere der diagnostischen Funktionsschicht des Laminatbandes, eine Vakuumwalze und einen Trägerantrieb für die Zufuhr des Trägerbandes zur Etikettiereinrichtung. Die Vorrichtung ist eingerichtet, um das von der Schneidvorrichtung geschnittene diagnostische Hilfsetikett auf die Vakuumwalze zu übertragen, wobei der Trägerantrieb und die Vakuumwalze derart zusammenwirken, dass das diagnostische Hilfsetikett von der Vakuumwalze auf das Trägerband übertragen wird. Für die Vorteile dieser Vorrichtung gegenüber bekannten Vorrichtungen kann weitgehend auf die obigen Beschreibung verweisen werden.

Das beschriebene Verfahren und die beschriebene Vorrichtung können auf verschiedene Weisen vorteilhaft weitergebildet werden. So können die Antriebe für das Laminatträgerband bzw. das Laminatband (Laminatantrieb), das Trägerband (Trägerantrieb) und die Vakuumwalze (Vakuumwalzenantrieb) synchronisiert sein. Diese Synchronisation hat in der Praxis einen erheblichen Gewinn an Positioniergenauigkeit der diagnostischen Hilfsetiketten und somit eine deutliche Erhöhung der Bandgeschwindigkeiten und des Durchsatzes bewirkt. Die Synchronisation kann auf mechanischem und/oder elektronischem Wege erfolgen, und es können auch zwei oder mehr der genannten Antriebe zusammengefasst werden.

Als Antriebe eignen sich beispielsweise Elektromotoren, insbesondere leistungsstarke Servomotoren, welche die genannten Genauigkeiten erreichen. So können beispielsweise drei Servomotoren eingesetzt werden, welche über ein BUS-System angesteuert werden können. Als Anlagensteuerung kann beispielsweise eine spezielle Hochleistungs-SPS fungieren. Aufgrund der hohen Transportgeschwindigkeit des Laminatträgerbandes und/oder des Trägerbandes sollten die Reaktionszeiten der SPS-Steuerung extrem niedrig sein. Zudem sollte die Reaktionszeit pro Zyklus immer gleich lang sein, um bei variablen Geschwindigkeiten einen exakten Gleichlauf (Synchronisation) der Antriebe erreichen zu können, da beispielsweise 1 ms Schaltzeit bei der Geschwindigkeit von etwa 55 m/min eine Platzierungstoleranz von 1 mm in Durchlaufrichtung bedeutet.

Alternativ oder zusätzlich zu einer Synchronisation der Antriebe können weiterhin die für das Schneiden der Hilfsetiketten verwendete mindestens eine Schneidvorrichtung mit einem oder mehreren der Antriebe synchronisiert werden. Die Schneidvorrichtung kann insbesondere einen Laser umfassen, beispielsweise einen CO₂-Laser, was eine besonders hohe Schneidegenauigkeit, eine hohe Schneidegeschwindigkeit und einen geringen Verschnitt der Hilfsetiketten bewirkt. Eine derartige Schneidvorrichtung, welche mindestens einen Laser beinhaltet, ist besonders leicht synchronisierbar, da lediglich ein Ein- und Ausschalten des Lasers und/oder ein Blockieren bzw. Freigeben des Laserstrahls und/oder ein Ablenken der Laserstrahls erforderlich ist.

Das Schneiden der diagnostischen Funktionsschicht kann insbesondere derart erfolgen, dass ein freies Ende der diagnostischen Funktionsschicht durch Führen des Laminatträgerbandes um eine Schneidkante mit kleinem Radius (beispielsweise einem Radius von weniger als 10 mm, insbesondere weniger als 5 mm) vom Laminatträgerband abgehoben wird. Dabei kann die abgehobene diagnostische Funktionsschicht dann in einem vorgegebenen Abstand von dem abgehobenen freien Ende mittels der Schneidvorrichtung geschnitten werden. Beispielsweise können wiederum Etiketten ausgeschnitten werden, oder, was im Rahmen der vorliegenden Erfindung bevorzugt ist, es kann einfach ein Abschnitt der abgehobenen diagnostischen Funktionsschicht vollständig abgehoben werden. Das abgehobene freie Ende der diagnostischen Funktionsschicht kann vor, während oder unmittelbar nach dem Schneiden auf die Vakuumwalze aufgebracht werden, sodass nach dem Schneiden das abgeschnittene Hilfsetikett vollständig auf die Vakuumwalze aufgebracht wird. Das Schneiden kann insbesondere im Bereich der Schneidkante erfolgen, beispielsweise innerhalb eines Luftspalts zwischen der Scheidkante und der Oberfläche der Vakuumwalze.

Im Unterschied zu bekannten Etikettierverfahren, wie beispielsweise dem in EP 1 593 434 A2 bekannten Etikettierverfahren, kann das Schneiden bei dem vorgeschlagenen Verfahren insbesondere im Wesentlichen verlustfrei durchgeführt werden. Unter "im wesentlichen verlustfrei" ist dabei ein Schneiden zu verstehen, bei welchem abgesehen vom Verschnitt durch die Schneidvorrichtung (welcher typischerweise im Bereich von ca. 1/10 mm liegen kann) kein Abfall entsteht, welcher, wie in EP 1 593 434 A2 beschrieben, abgegittert werden müsste. Die diagnostische Funktionsschicht wird also, von ihrem freien Ende her, vorzugsweise vollständig in Hilfsetiketten zerschnitten, in dem immer in einem vorgegebenen Abstand von diesem abgehobenen freien Ende aus ein Hilfsetikett von dieser abgehobenen diagnostischen Funktionsschicht abgeschnitten und auf die Vakuumwalze übertragen wird. Dies bedeutet einen erheblichen Vorteil gegenüber üblichen Etikettierverfahren, wie nicht nur dem in EP 1 593 434 A2 beschriebenen Verfahren, sondern beispielsweise auch den Etikettierverfahren gemäß US 6,206,071 B1 oder anderen bekannten Etikettiervorrichtungen, da das Abgittern in der Praxis nicht nur erheblichen technischen Aufwand verursachen kann, sondern da nunmehr die kostenintensive diagnostische Funktionsschicht vollständig genutzt werden kann.

Weitere vorteilhafte Ausgestaltungen betreffen die Bandführung des Laminatbandes bzw. Laminatträgerbandes und/oder des Trägerbandes. So kann für eine bessere Führung durch die genannten Antriebe das Laminatträgerband und/oder das Trägerband beispielsweise elektrostatisch aufgeladen werden, um eine bessere Haftung beispielsweise auf einer oder mehrerer Rollen der Antriebe zu gewährleisten.

Weiterhin ist es bevorzugt, wenn das Verfahren und die Vorrichtung derart ausgestaltet sind, das immer jeweils ein diagnostisches Hilfsetikett gleichzeitig auf der Vakuumwalze aufgebracht ist. Dies vereinfacht die Übertragung und erhöht die Positioniergenauigkeit.

Eine weitere Verbesserung der Positioniergenauigkeit betrifft die Ausgestaltung der Führung und des Antriebs des Trägerbandes am Ort der Übertragung des diagnostischen Hilfsetiketts, d.h. am Ort der Etikettierreinrichtung. So kann insbesondere das Trägerband an diesem Ort eben geführt werden, beispielsweise unter Verwendung einer Auflage auf einer der Etikettierseite des Trägerbandes gegenüberliegenden Seite, welche einen Gegendruck zur Vakuumwalze aufweist. Besonders bevorzugt ist es jedoch, an diesem Ort der Übertragung des diagnostischen Hilfsetiketts auf das Trägerband eine Auftragswalze vorzusehen, wobei das Trägerband durch einen Walzenspalt zwischen der Auftragswalze und der Vakuumwalze geführt wird. Das Trägerband kann dabei eben über die Auftragswalze geführt werden, d.h. ohne wesentliche Umlenkung durch die Auftragswalze. Besonders bevorzugt ist es jedoch, wenn die Auftragswalze derart ausgestaltet ist, dass das Trägerband zumindest teilweise dem Umfang der Auftragswalze folgt, also durch diese Auftragswalze umgelenkt wird. Dabei kann die Auftragswalze besonders bevorzugt ein Teil des Antriebs des Trägerbandes sein. Diese Weiterbildung der Erfindung hat den Vorteil, dass der Antrieb des Trägerbandes unmittelbar am Ort der Auftragung der Hilfsetiketten erfolgt, sodass beispielsweise Dehnungseffekte des Trägerbandes nur eine geringfügige Rolle spielen. Die räumliche Zusammenbringung von Antrieb und Auftragungsort der Hilfsetiketten bewirkt somit eine erhebliche Verbesserung der Genauigkeit der Positionierung der Hilfsetiketten auf dem Trägerband.

Ein weiterer Vorteil der Verwendung einer Vakuumwalze zur Aufbringung der Hilfsetiketten auf das Trägerband besteht in der Möglichkeit, korrigierend in die Aufbringung einzugreifen. Dies ist insbesondere von Vorteil, da die Qualitätssicherung bei der Herstellung von Medizinprodukten eine erheblich höhere Rolle spielt als im Bereich üblicher Etikettiermaschinen, in welche sämtliche Etiketten unkritisch und ohne Beachtung deren Qualität auf einen zu etikettierenden Gegenstand aufgebracht werden.

So wird die Vakuumwalze dazu genutzt, fehlerhafte Hilfsetiketten und/oder fehlerhafte Abschnitte der diagnostischen Funktionsschicht aus dem Herstellungsprozess auszuschleusen. Zu diesem Zweck wird beispielsweise die diagnostische Funktionsschicht und/oder andere Bereiche des Laminatbandes mit einer Fehlermarkierung versehen, welche fehlerhafte Abschnitte der diagnostischen Funktionsschicht kenntlich macht. Diese Fehlermarkierungen können beispielsweise dadurch aufgebracht werden, dass die beschriebene Vorrichtung eine Fehlererkennungsvorrichtung aufweist und/oder eine Markierungsvorrichtung. Die Fehlererkennungsvorrichtung kann beispielsweise derart ausgestaltet sein, dass die diagnostische Funktionsschicht und/oder das Laminatband optisch und/oder elektrisch und/oder auf andere Weise auf Fehler untersucht wird. Auf diese Weise kann beispielsweise eine Verfärbung einer Testchemie und/oder eine Fehlpositionierung von Lanzetten auf dem Laminatband erkannt werden. Die Fehlermarkierungsvorrichtung kann eingesetzt werden, um das Laminatband und/oder die diagnostische Funktionsschicht entsprechend zu markieren, wenn derartige Fehler erkannt werden. So können beispielsweise Fehlermarkierungen auf das Laminatband und/oder die diagnostische Funktionsschicht aufgedruckt werden und/oder es kann eine anders gestaltete Markierung der Fehler erfolgen. Beispielsweise kann eine Testchemie selbst durch Einwirkung eines Markierungsstrahls, beispielsweise eines Lichtstrahls (z.B. im sichtbaren und/oder ultravioletten Spektralbereich) verwendet werden. Auf diese Weise können beispielsweise fehlerhafte Abschnitte der in der Regel lichtempfindlichen Testchemie eingefärbt werden, um auf diese Weise diese Abschnitte als fehlerhaft kenntlich zu machen.

Die Vorrichtung kann weiterhin im Bereich der Etikettiereinrichtung (d.h. beispielsweise in unmittelbarer Nähe der Vakuumwalze) eine Detektionsvorrichtung aufweisen, welche die Fehlermarkierungen erkennt. Beispielsweise kann es sich hierbei um eine optische und/oder elektrische Detektionsvorrichtung handeln, welche speziell auf die Fehlermarkierungen angepasst ist und somit beispielsweise aufgedruckte Fehlermarkierungen und/oder verfärbte Bereiche in der Testchemie erkennt.

Die verwendete Vakuumwalze erlaubt ein besonders einfaches Ausschleusen derartiger fehlerhafter Abschnitte der diagnostischen Funktionsschicht. So können vor oder nach dem Aufbringen auf die Vakuumwalze derartige fehlerhaft markierte Abschnitte entfernt und beispielsweise entsorgt werden. Für dieses Entfernen fehlerhafter Abschnitte kann beispielsweise die Vorrichtung einer Abzugsvorrichtung aufweisen, wobei als Abzugsvorrichtung verschiedene Vorrichtungen einsetzbar sind. So kann das Entfernen der fehlerhaften Abschnitte von der Vakuumwalze beispielsweise auf elektrostatischem, auf mechanischem oder auf anderem Wege erfolgen. Besonders bevorzugt ist es, wenn eine Absaugvorrichtung verwendet wird, welche zum Entfernen der fehlerhaften Abschnitte genutzt wird und welche beispielsweise von der Detektionsvorrichtung getriggert wird, sobald ein als fehlerhaft markierter Abschnitt der diagnostischen Funktionsschicht erkannt wird. Eine derartige Absaugung kann innerhalb von Sekundenbruchteilen erfolgen, sodass der Produktionsprozess als ganzes nicht oder nur unwesentlich beeinflusst werden muss. Zudem bietet die Absaugvorrichtung den Vorteil, dass gleichzeitig oder zusätzlich zu fehlerhaften Abschnitten der diagnostischen Funktionsschicht auch Verunreinigungen entfernt werden können, sodass eine Problematik der Kontamination deutlich reduziert werden kann.

Wie oben beschrieben, können die diagnostischen Hilfsetiketten ein oder mehrere diagnostische Hilfsmittel umfassen, welche beispielsweise durch das beschriebene Verfahren in regelmäßigen Abständen auf das Trägerband aufgebracht werden. Besonders bevorzugt ist es, wenn die diagnostischen Hilfsetiketten jeweils mehrere derartige diagnostische Hilfsmittel umfassen, vorzugsweise mehrere gleichartig gestaltete diagnostische Hilfsmittel. Auf diese Weise kann das beschriebene Verfahren beispielsweise dadurch rationalisiert werden, dass die diagnostische Funktionsschicht des Laminatbandes mehrere parallel in einer Laufrichtung des Laminatbandes angeordnete Bahnen diagnostischer Hilfsmittel aufweist, sodass beim Schneiden der diagnostischen Funktionsschicht das dabei entstehende diagnostische Hilfsetikett mehrere diagnostische Hilfsmittel aufweist, welche dann in Anordnung senkrecht zur Laufrichtung des Trägerbandes auf dieses aufgebracht werden. Das Trägerband kann dann beispielsweise durch einen mechanischen oder optischen Schneideprozess in mehrere Teilbänder geschnitten werden, wobei beispielsweise jedes dieser Teilbänder ein diagnostisches Hilfsmittel jedes diagnostischen Hilfsetiketts umfasst. Diese Teilbänder können anschließend als eigentliche Analysebänder verwendet werden. Dieses beschriebene Schneidverfahren in mehrere Teilbänder kann beispielsweise analog zu dem in EP 1 593 434 A2 beschriebenen Schneidverfahren ausgestaltet werden.

Weiterhin kann das Verfahren dadurch weiterentwickelt werden, dass das Trägerband zusätzliche Markierungen umfasst. Diese Markierungen können beispielsweise durch ein

Rotations-Siebdruck-Verfahren und/oder ein anderes Druckverfahren oder Beschichtungsverfahren auf das Trägerband aufgebracht werden, vorzugsweise bevor die Hilfsetiketten auf das Trägerband aufgebracht werden. So können beispielsweise Positionierungsmarken auf dem Trägerband aufgebracht sein, welche im Rahmen des Herstellungsverfahrens für die Positionierung der Hilfsetiketten verwendet werden können und/oder welche später beispielsweise in einem analytischen Testgerät für eine Positionierung der diagnostischen Hilfsmittel innerhalb des Gerätes eingesetzt werden können.

Alternativ oder zusätzlich kann das Trägerband weiterhin Referenzmarken für eine optische Kalibrierung des Analysebandes umfassen. Insbesondere können Farbmarkierungen auf dem Trägerband aufgebracht sein, welche einen Farbabgleich ermöglichen. Dies ist insbesondere dann von Vorteil, wenn das Analyseband diagnostische Hilfsmittel umfasst, welche auf optischem Wege genutzt werden, beispielsweise Testchemien, welche für einen optischen Analytnachweis genutzt werden. So können die Referenzmarken beispielsweise weiße und/oder schwarze Felder umfassen, welche für einen derartigen Farbabgleich und/oder eine Kalibrierung eingesetzter Lichtquellen (beispielsweise Remissionsmessungen) genutzt werden können.

### Ausführungsbeispiele

Weitere Einzelheiten und Merkmale der Erfindung ergeben sich aus der nachfolgenden Beschreibung von bevorzugten Ausführungsbeispielen, in Verbindung mit den Unteransprüchen. Hierbei können die jeweiligen Merkmale sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Figuren einander entsprechende Elemente.

Im Einzelnen zeigt:
- Figur 1: ein Ausführungsbeispiel eines nach einem erfindungsgemäßen Verfahren herstellbaren Analysebandes;
- Figur 2: ein Ausführungsbeispiel eines Blutzucker-Testgeräts mit einer ein Analyse- band enthaltenden Bandkassette;
- Figur 3: ein Ausführungsbeispiel eines bei einem erfindungsgemäßen Verfahren ein- gesetzten Laminatbandes in Draufsicht;
- Figur 4: das Laminatband gemäß Figur 3 in einer Schnittdarstellung;
- Figur 5: ein Ausführungsbeispiel eines bei einem erfindungsgemäßen Verfahren ein- setzbaren Trägerbandes mit einem aufgebrachten diagnostischen Hilfseti- kett;
- Figur 6: ein zu Figur 1 alternatives Ausführungsbeispiel eines Analysebandes mit diagnostischen Hilfselementen mit Lanzetten;
- Figur 7: eine Detaildarstellung eines diagnostischen Hilfselements des Analysebands gemäß Figur 6;
- Figur 8: ein Ausführungsbeispiel einer Bandkassette für ein diagnostisches Testband, auf welchem alternierend diagnostische Hilfsmittel mit Testfeldern und dia- gnostische Hilfsmittel mit Lanzetten aufgebracht sind;
- Figur 9: ein Ausführungsbeispiel einer erfindungsgemäßen Vorrichtung zur Herstel- lung eines analytischen Testbandes;
- Figur 10: eine Detaildarstellung einer Etikettiereinrichtung des Ausführungsbeispiels gemäß Figur 9;
- Figur 11: eine Prinzipskizze der Etikettiereinrichtung der Vorrichtung gemäß Figur 10;
- Figur 12: eine Prinzipskizze eines alternativen Ausführungsbeispiels einer Etikettier- einrichtung;
- Figuren 13 und 14: verschiedene perspektivische Darstellungen eines Ausführungsbei- spiels einer Drucksteuereinrichtung; und
- Figur 15: eine perspektivische Darstellung eines Ausführungsbeispiels eines Außen- teils einer Vakuumwalze.

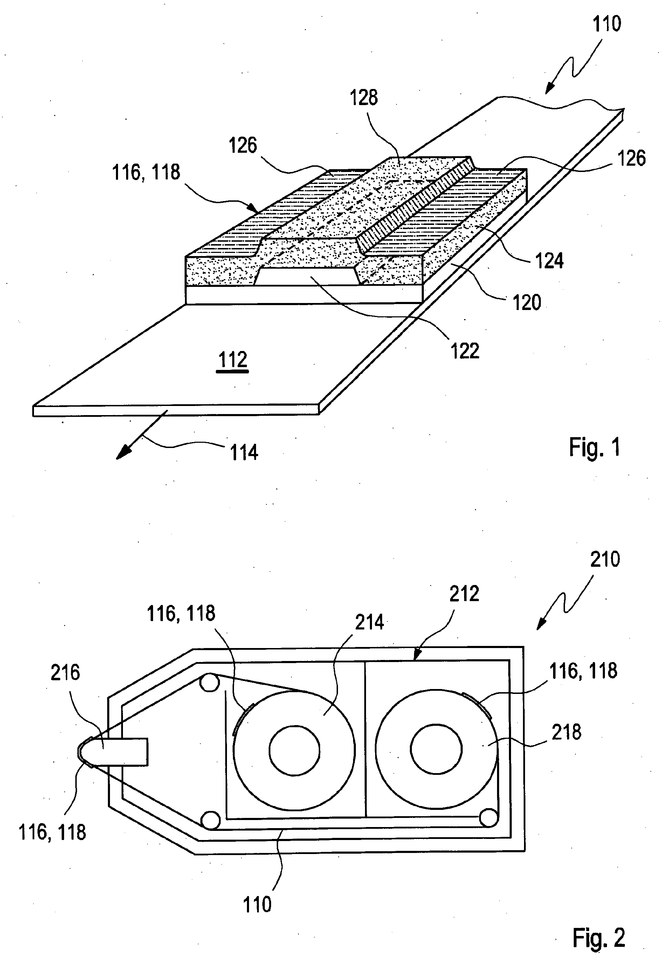

In Figur 1 ist ein mögliches Ausführungsbeispiel eines Analysebandes 110, wie es beispielsweise aus EP 1 593 434 A2 bekannt ist und wie es beispielsweise durch ein im Nachfolgenden beschriebenes erfindungsgemäßes Verfahren hergestellt werden kann, dargestellt. Das Analyseband 110 umfasst ein Trägerband 112, welches beispielsweise als Trägerfolie in Form einer Kunststofffolie ausgestaltet sein kann. Diese Trägerfolie kann beispielsweise sehr dünn ausgestaltet sein, beispielsweise mit einer Dicke zwischen 10 und 15 µm, und kann mindestens ein Kunststoffmaterial, beispielsweise Polyethylen, umfassen.

Auf dem Trägerband 112 sind in einer Transportrichtung 114 beabstandet eine Vielzahl von Testfeldern 116 aufgebracht. Von diesen Testfeldern 116, welche beispielsweise in einem Abstand von 110 mm angeordnet sein können, und eine Länge in Transportrichtung 114 von ca. 15 mm aufweisen können, ist in Figur 1 lediglich eines dargestellt. Im Folgenden sei angenommen, dass die Testfelder 116 ausgestaltet sind, um einen Analyten, insbesondere Blutglukose, in Körperflüssigkeiten, insbesondere in Blut, nachzuweisen.

Das Analyseband 110 gemäß der Darstellung in Figur 1 kann beispielsweise dem Ausführungsbeispiel gemäß EP 1 596 434 A2 entsprechen. Die Testfelder 116 bilden in diesem Ausführungsbeispiel jeweils ein diagnostisches Hilfsmittel 118 und können beispielsweise als selbstklebende Testetiketten mehrlagig ausgebildet sein. Sie umfassen jeweils einen Abschnitt eines optionalen Klebebandes 120, eines Films einer Testchemie 122 und einer optionalen saugfähigen Decklage 124 in Form eines Gewebes. Diese Decklage 124 dient dazu, dass eine aufgebrachte flüssige Probe sich gleichmäßig auf dem Testfeld 116 verteilen kann und wird oft auch als "Sprite-Schicht" bezeichnet. Außerhalb der Testchemie 122 ist diese Decklage 124, welche vorzugsweise hydrophile Eigenschaften aufweist, bereichsweise mit einer Imprägnierung 126, welche vorzugsweise hydrophobe Eigenschaften aufweist, versehen. Beispielsweise kann es sich bei dieser Imprägnierung 126 um eine aufgedruckte Wachsschicht handeln, welche lediglich eine zentrale Nachweiszone 128 im Bereich der Testchemie 122 freilässt, innerhalb derer sich die flüssige Probe ausbreiten kann. Die Testchemie 122 soll ausgestaltet sein, um mindestens eine nachweisbare Eigenschaft, beispielsweise eine optische oder elektrochemische Eigenschaft, zu ändern, wenn diese in Kontakt mit dem mindestens einen nachzuweisenden Analyten gerät. Derartige Testchemien sind aus dem Stand der Technik, beispielsweise dem eingangs zitierten Stand der Technik, bekannt.

In Figur 2 ist ein Blutzucker-Testgerät 210 dargestellt, in welchem sich das Analyseband 110, aufgenommen in einer Bandkassette 212, einsetzen lässt. Dabei ist das Analyseband 110 auf einem Gutwickel 214 aufgewickelt. Durch Vorspulen können die einzelnen Testfelder 116 im Bereich eines Messkopfes 216 exponiert werden, um einen Blutzuckertropfen für die Glukosebestimmung aufzutragen. Die Flüssigkeitsaufnahme erfolgt dabei in der zentralen Nachweiszone 128 der Decklage 124, wobei die mit der Imprägnierung 126 versehenen Randstreifen die Flüssigkeitsausbreitung begrenzen. Aufgrund des mehrlagigen Aufbaus besitzen die Testfelder 116 eine gewisse Höhe, während das dünne, flexible Trägerband 112 in den dazwischenliegenden Bereichen eine zuverlässige Abdichtung an Dichtelementen erlaubt, so dass eine sichere und vor Umwelteinflüssen geschützte Magazinierung möglich ist. Nach Verwendung werden die benutzten Testfelder 116 durch Weiterspulen des Analysebandes 110 auf einen Schlechtwickel 218 aufgespult und somit sicher und hygienisch remagaziniert.

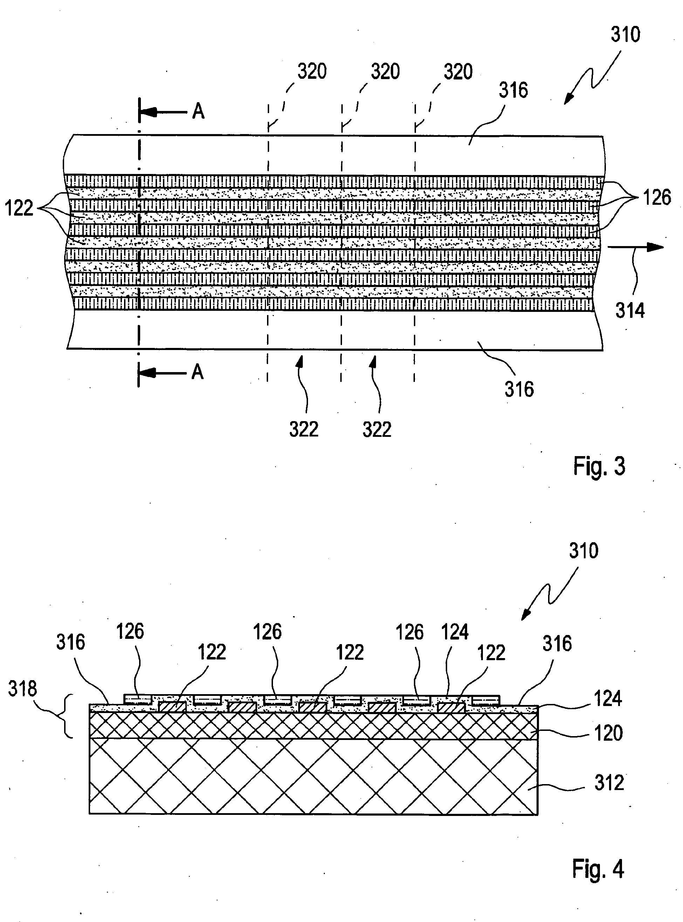

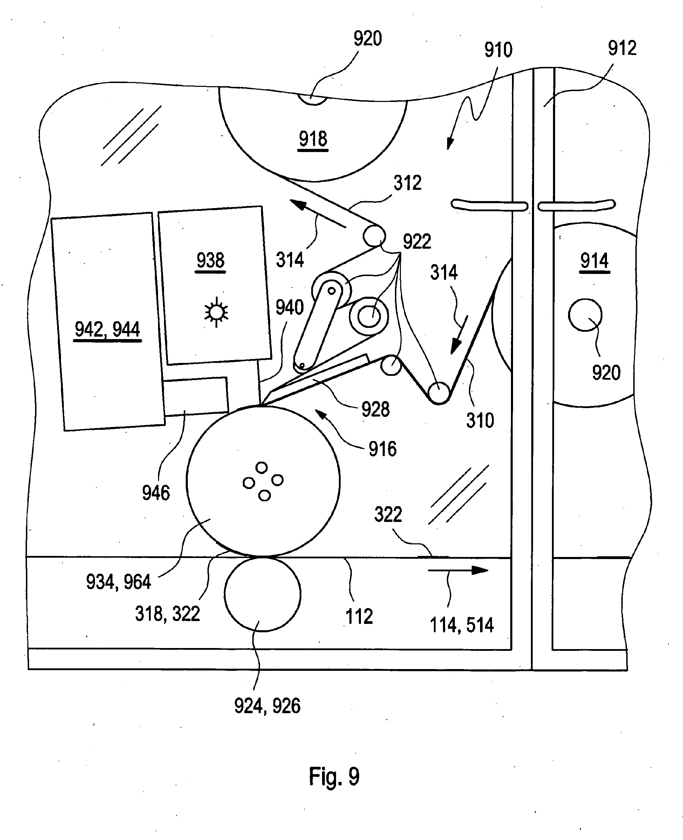

Erfindungsgemäß wird die Herstellung der Analysebänder 110 mittels eines Rolle-zu-Rolle-Verfahrens vorgenommen, welches unter anhand der Figuren 9 bis 12 näher erläutert wird. Als Vorprodukt für die Herstellung des Analysebandes wird zum einen das in Figur 1 bereits beschriebene Trägerband 114 verwendet. Als zweites Vorprodukt wird erfindungsgemäß ein Laminatband 310 eingesetzt. Exemplarisch ist ein derartiges Laminatband für die Erzeugung von diagnostischen Hilfsmitteln 118 mit einer Testchemie 122 in den Figuren 3 und 4 dargestellt. Dabei zeigt Figur 3 eine Draufsicht auf das Laminatband 310, wohingegen Figur 4 eine Schnittdarstellung entlang der Schnittlinie A-A in Figur 3 zeigt.

Wie aus Figur 4 erkennbar ist, weist das Laminatband ein Laminatträgerband 312 auf. Dieses Laminatträgerband 312 kann beispielsweise wiederum ein Kunststoffband umfassen; beispielsweise wieder eine Polyethylen-Folie oder ein ähnlich gestaltetes Laminatträgerband. Auf dieses Laminatträgerband 312 ist die Klebeschicht 120 aufgebracht, welche der Klebeschicht 120 in Figur 1 entspricht und bei dem erfindungsgemäßen Verfahren vorzugsweise vom Laminatträgerband 312 mit auf das Trägerband 112 übertragen wird. Auf die Klebeschicht ist in strukturierten Bahnen die Testchemie 122 aufgebracht, wobei sich die Bahnen parallel zu einer Laufrichtung 314 des Laminatbandes 310 erstrecken. Im vorliegenden Fall weisen diese Bahnen der Testchemie 122 eine Breite von ca. 2 mm auf (die Darstellung in den Figuren 3 und 4 sind lediglich schematisch und nicht maßstabsgerecht) und sind äquidistant angeordnet, mit einem Zwischenraum von ebenfalls ca. 2-3 mm. Insgesamt sind auf dem Laminatband 310 fünf Streifen von Testchemie 122 vorgesehen.

Wie oben beschrieben, sind die Testchemie-Streifen 122 mit einer Decklage 124 eines hydrophilen Gewebes bedeckt. Diese Bedeckung erfolgt derart, dass sich die Decklage 124 über die gesamte Breite des Laminatträgerbandes 312 erstreckt. Wie oben beschrieben, wird zudem außerhalb der Testchemie 122 auf die Decklage 124 jeweils eine ebenfalls streifenförmige Imprägnierung 126 aufgebracht, wobei insgesamt sechs derartige Streifen der Imprägnierung 126, welche sich ebenfalls in Laufrichtung 314 erstrecken, aufgebracht werden. Diese Aufbringung erfolgt derart, dass Randbereiche 316 des Laminatbandes 310 unbedeckt bleiben.

Die Klebeschicht 120, die Testchemie 122, die Decklage 124 und die Imprägnierung 126 bilden zusammen eine diagnostische Funktionsschicht 318. Diese diagnostische Funktionsschicht 318 wird in dem unten beschriebenen Verfahren entlang von senkrecht zur Laufrichtung 314 verlaufenden Schnittlinien 320 geschnitten, wohingegen das Laminatträgerband 312 ungeschnitten verbleibt. Auf diese Weise bilden sich aus der diagnostischen Funktionsschicht 318 beim Schneiden diagnostische Hilfsetiketten 322, welche auf das Trägerband 112 übertragen werden.

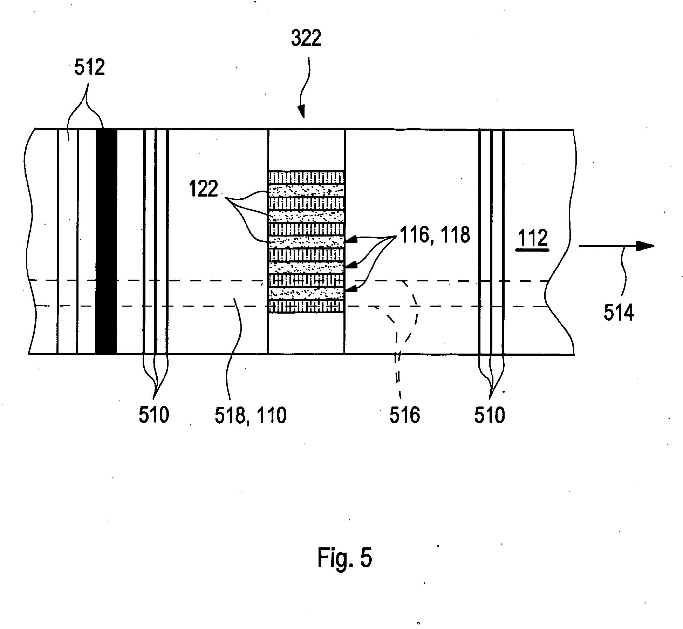

In Figur 5 ist ein derartiges Trägerband 112 mit darauf aufgeklebten diagnostischen Hilfsetiketten 322 schematisch dargestellt. Wiederum ist nur ein derartiges diagnostisches Hilfsetikett 322 gezeigt, andere Hilfsetiketten 322 sind äquidistant hierzu angeordnet.

Weiterhin ist in Figur 5 erkennbar, dass auf dem Trägerband 112 Positionierungsmarken 510 angeordnet sind, welche in Figur 5 lediglich schematisch angedeutet sind. Diese Positionierungsmarken 510 dienen beispielsweise zur Positionierung der Testfelder 116 in dem Blutzucker-Testgerät 210 gemäß Figur 2. Weiterhin können diese Positionierungsmarken bei dem unten beschriebenen Herstellungsverfahren eingesetzt werden. Neben den Positionierungsmarken 510 umfasst das Trägerband 112 in dem in Figur 5 dargestellten Ausführungsbeispiel jeweils Referenzmarken 512, beispielsweise in Form jeweils eines senkrecht zur Laufrichtung 514 des Trägerbandes 112 aufgebrachten weißen und schwarzen Balkens, welche für einen Farbabgleich und/oder Remissionsabgleich genutzt werden können.

Das diagnostische Hilfsetikett 322 umfasst, entsprechend der streifenförmigen Anordnung der Testchemie 122, in diesem Ausführungsbeispiel fünf diagnostische Hilfsmittel 118 in Form von Testfeldern 116, welche parallel zueinander nebeneinander senkrecht zur Laufrichtung 514 angeordnet sind. In einem anschließenden Schneideverfahren wird das derart erzeugte Trägerband 112 mit den darauf aufgebrachten diagnostischen Hilfsetiketten 322 entlang von Schnittlinien 516, welche parallel zur Laufrichtung 514 verlaufen und in Figur 5 lediglich angedeutet sind, geschnitten. Insgesamt sind beispielsweise im vorliegenden Fall sechs derartige Schnittlinien 516 nötig, entlang derer das Trägerband 112 mit den darauf aufgebrachten Hilfsetiketten 322 in Teilbänder 518 geschnitten wird. Jedes dieser dabei in Figur 5 entstehenden fünf Teilbänder 518 bildet ein Analyseband 110, beispielsweise ein Analyseband 110 gemäß der Darstellung in Figur 1. Auf diese Weise lassen sich somit durch das erfindungsgemäße Rolle-zu-Rolle-Verfahren parallel und gleichzeitig fünf Analysebänder 110 herstellen.

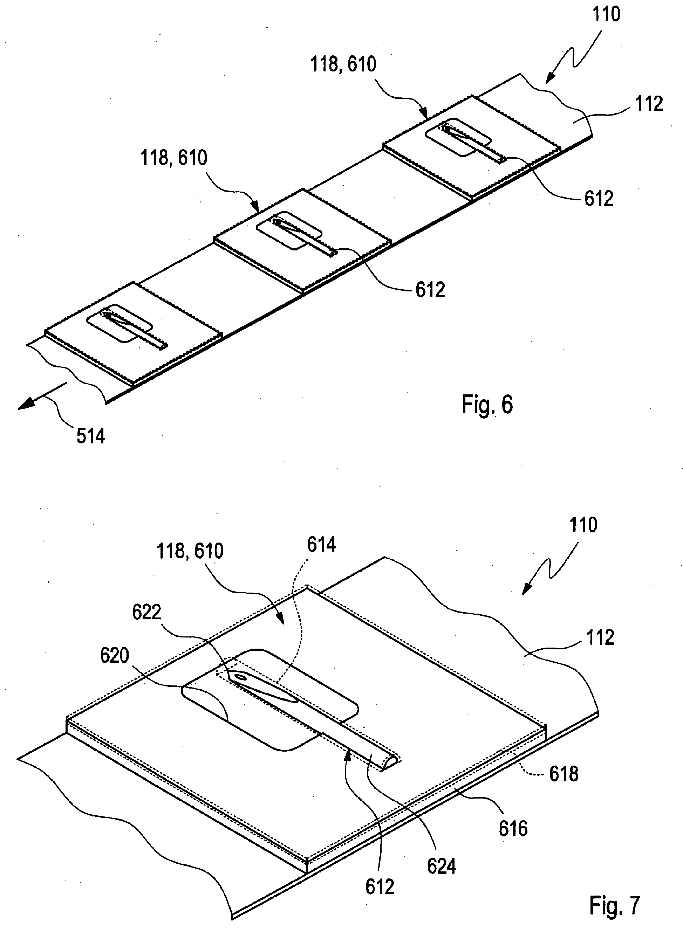

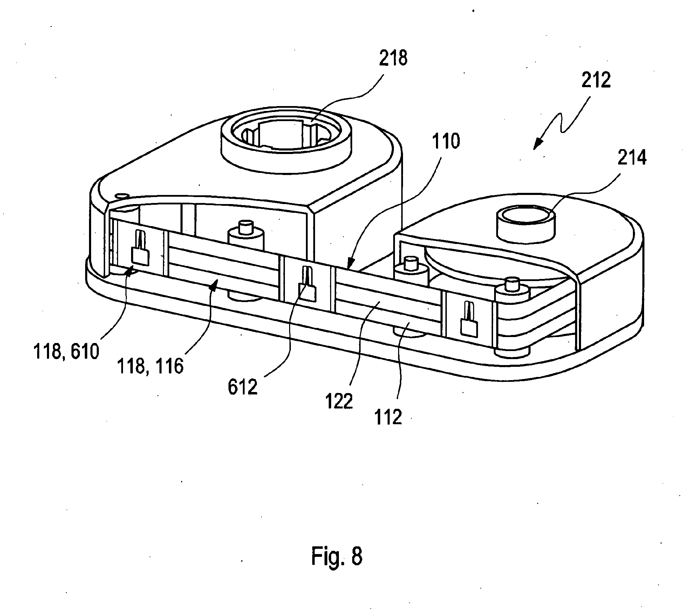

Die oben beschriebenen Ausführungsbeispiele sind Beispiele, bei denen das Analyseband 110 ausschließlich diagnostische Hilfsmittel 118 in Form von Testfeldern 116 umfasst. Auch andere Arten diagnostischer Hilfsmittel 118 sind jedoch denkbar und im Rahmen der Diagnostik und/oder Therapeutik im Zusammenhang mit einem Analyseband 110 einsetzbar. Ein Ausführungsbeispiel eines alternativen Analysebandes 110 ist in Figur 6 dargestellt. Dieses Analyseband 110 weist wiederum ein Trägerband 112 auf, welches in diesem Ausführungsbeispiel diagnostische Hilfsmittel 118 in Form von Lanzettenpackungen 610 mit jeweils einer Lanzette 612 äquidistant aufgebracht sind. Die Lanzettenpackungen 610 sind in Figur 7 in vergrößerter Detaildarstellung gezeigt. Die Lanzettenpackungen 610 können, analog zu den diagnostischen Hilfsetiketten 322 in den vorangehend beschriebenen Ausführungsbeispielen, ebenfalls in Form von Etiketten auf dem Trägerband 112 fixiert werden. Aufgrund der flexiblen und flachen Lanzettenpackungen 610 ergibt sich so ein aufrollbares Analyseband 110, welches in ein Handgerät zur automatischen Handhabung einsetzbar ist (beispielsweise analog zu dem in Figur 8 dargestellten Handgerät).

In der Vergrößerung nach Figur 7 ist zu erkennen, dass die jeweilige Lanzette 612 in einer durch die Lanzettenpackung 610 gebildeten Tasche 614 geschützt ist. Die Tasche 614 wird durch einen Folienverbund aus einer Bodenfolie 616 und einer Deckfolie 618 gebildet. Ein erweiterter Taschenbereich 620 nimmt die Lanzettenspitze 622 freiliegend auf, während ein proximaler Schaftabschnitt 624 der Lanzette 612 eng eingeschlossen wird. Ein maschineller Umgang auch mit sehr kleinen Nadelelementen wird somit erleichtert, ohne dass eine Beschädigung der sehr empfindlichen Lanzettenspitze 622 sowie eine Beeinträchtigung von deren Sterilität befürchtet werden muss. In der gezeigten Ausführung ist eine senkrecht zur Laufrichtung 514 ausgerichtete Rundlanzette 612 vorgesehen. Denkbar sind auch andere Orientierungen- und/oder Ausformungen, beispielsweise in Form eines mit einem rillenförmigen kapillaren Sammelkanal versehenen flachen Stechelements.

In Figur 8 ist ein Ausführungsbeispiel einer Bandkassette 212 dargestellt, welche ein Ausführungsbeispiel eines Analysebandes 110 beinhaltet, auf dem alternierend diagnostische Hilfsmittel 118 in Form von Testfeldern 116 und Lanzettenpackungen 610 aufgebracht sind. Jede Lanzettenpackung 610 umfasst eine Lanzette 612, welche beispielsweise in diesem Ausführungsbeispiel als Flachlanzette ausgestaltet sein kann und welche grundsätzlich ähnlich zu dem in den Figuren 6 und 7 dargestellten Ausführungsbeispiel ausgestaltet sein kann. Sowohl die Testfelder 116 als auch die Lanzettenpackungen 610 können in Form von Etiketten auf ein Trägerband 112 des Analysebandes aufgebracht sein.

Die Bandkassette 212 umfasst wiederum einen Gutwickel 214 als Vorratsspule für unverbrauchtes Bandmaterial und einen Schlechtwickel 218 als Aufwickelspule zur Remagazinierung bzw. Entsorgung von verbrauchten diagnostischen Hilfsmitteln 118. Die Bereitstellung diagnostischer Hilfsmittel 118 kann durch sukzessiven Bandvorschub, vorzugsweise in einem Handgerät, erfolgen, um einen weitgehend automatischen Messablauf zu ermöglichen. Ein derartiges Handgerät kann beispielsweise einen Aktuator zur Betätigung der jeweils in einer Applikationsposition befindlichen Lanzette 612 umfassen und eine Auswertevorrichtung zur Auswertung (beispielsweise optischen Auswertung) der Messung der Analytkonzentration mittels des jeweiligen in einer Messposition befindlichen Testfeldes 116. Im Zuge einer derartigen Messung, die vom Patienten vor Ort selbst vorgenommen werden kann, wird eine dünne Deckfolie (Bezugsziffer 618 in Figur 7) von der Lanzette 612 aufgeschlitzt und dabei die Lanzettenspitze 622 freigelegt. Durch einen geeigneten Aktuator kann dann eine Stechbewegung beispielsweise zum Einstechen in einen Finger durchgeführt werden. Der proximale Schaftabschnitt 624 bleibt hierbei zweckmäßig mit dem Folienlaminat verbunden, sodass die anschließende Entsorgung der Lanzette 612 auf dem Trägerband 112 vereinfacht wird.

Die genannten diagnostischen Hilfsmittel 118, welche Testfelder 116 und/oder Lanzetten 612 umfassen können, sind nur einige der vielen möglichen Ausführungsbeispiele, welche für die medizinische Diagnostik und/oder Therapeutik verwendet werden können und für welche das nachfolgend beschriebene Herstellungsverfahren einsetzbar ist. Daneben sind Analysebänder 110 einsetzbar, welche andere Arten diagnostischer Hilfsmittel 118 oder Kombinationen derartiger diagnostischer Hilfsmittel 118 umfassen können.

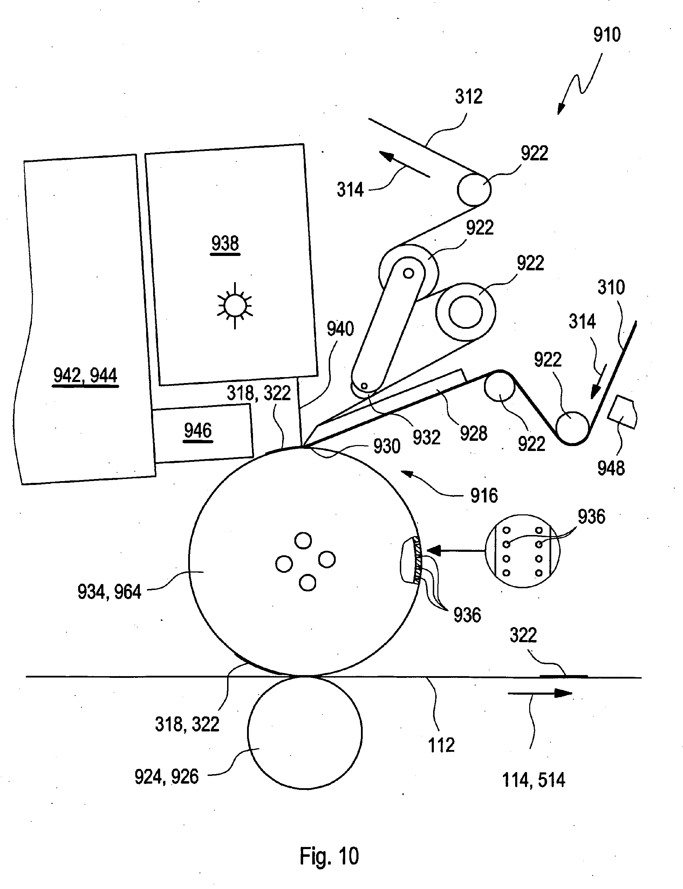

In den Figuren 9 und 10 ist eine erfindungsgemäße Vorrichtung 910 zur Herstellung eines Analysebandes 110, beispielsweise eines Analysebandes 110 gemäß einem der vorangehend beschriebenen Ausführungsbeispiele, in perspektivischer Darstellung gezeigt. Die Vorrichtung 910 ist vorzugsweise in einem Gehäuse 912 aufgenommen, welches in Figur 9 erkennbar ist und welches insbesondere mit derart getönten Scheiben ausgestattet ist, so dass eine Schädigung lichtempfindlicher Testchemie 122 durch UV-Licht vermieden werden kann.

In der Vorrichtung 910 wird ein Rolle-zu-Rolle-Verfahren eingesetzt, um diagnostische Hilfsmittel 118 (in den Figuren nicht erkennbar) auf ein Trägerband 112 aufzubringen. Nachfolgend sei angenommen, dass es sich bei den diagnostischen Hilfsmitteln 118 um Hilfsmittel mit Testfeldern 116 handelt, so dass bezüglich der Einzelheiten dieser diagnostischen Hilfsmittel 118 beispielsweise auf die Beschreibung der Figuren 1, 3, 4 und 5 verwiesen werden kann. Auch andere Arten diagnostischer Hilfsmittel 118 sind jedoch mittels des Verfahrens aufbringbar.

Bei dem beschriebenen Verfahren wird ein Laminatband 310 von einem Laminatband-Gutwickel 914 abgespult und einer Etikettiereinrichtung 916 zugeführt. Dort wird, entsprechend dem nachfolgend beschriebenen Verfahren, die diagnostische Funktionsschicht 318 vom Laminatträgerband 312 abgehoben, und das verbrauchte Laminatträgerband 312 auf einen Laminatband-Schlechtwickel 918 aufgewickelt. Die Bewegung des Laminatbands 310 ist in Figur 9 mit der Bezugsziffer 314 bezeichnet. Diese Bewegung wird durch Laminatantriebe 920 bewirkt, welche in Figur 9 lediglich symbolisch angedeutet sind. Beispielsweise kann ein Laminatantrieb 920 mit dem Schlechtwickel 918 und/oder mit dem Gutwickel 914 und/oder mit einer oder mehreren Umlenkrollen 922 (welche in diesem Fall zu Transportrollen werden) verbunden sein. Im Fall des Antriebs der Transportrollen bzw. Umlenkrollen 922 kann beispielsweise der Laminatantrieb 920 unmittelbar hinter den angetriebenen Umlenkrollen 922 angeordnet sein. Das Trägerband 112 wird durch einen Trägerantrieb 924 in seiner Laufrichtung 114, 514 angetrieben, welcher in Figur 9 ebenfalls nur symbolisch angedeutet ist. Beispielsweise kann eine Auftragswalze 926 im Bereich der Etikettiereinrichtung 916 vorgesehen sein, welche durch den Trägerantrieb 924 angetrieben wird. Alternativ oder zusätzlich kann der Trägerantrieb jedoch an anderen Stellen Antriebe umfassen, welche das Trägerband 112 vorantreiben.

Die Etikettiereinrichtung 916 der Vorrichtung 910 ist in Figur 10 in vergrößerter Detaildarstellung gezeigt. Hierbei ist zu erkennen, dass das Laminatband 310 über Umlenkwalzen 922 zu einer Schneidkante 928 geführt wird. Dabei wird das Laminatband 310 um eine Spitze 930 der Schneidkante 928 herumgeführt, wobei diese Spitze einen kleinen Radius aufweist. Die Spitze 930 wird auch als "Spendekante" bezeichnet. Anschließend wird das Laminatband 310 auf der Oberseite der Schneidkante 928 entlang geführt, dort durch eine Anpresswalze 932 gehalten, und schließlich über weitere Umlenkwalzen 922 als Schlechtware zu dem (in Figur 10 nicht dargestellten) Laminatband-Schlechtwickel 918 geführt. Die Schlechtware setzt sich in diesem Fall nur noch aus dem Laminatträgerband 312 zusammen, wohingegen beim Aufwickeln auf den Schlechtwickel 218 die diagnostische Funktionsschicht 318 bereits verspendet ist.

Weiterhin weist die Etikettiereinrichtung 916 eine Vakuumwalze 934 auf. Die Spitze 930 der Schneidkante 928 ist unmittelbar oberhalb dieser Vakuumwalze 934 angeordnet. Die Vakuumwalze 934 weist auf ihrem Umfang Ansaugöffnungen 936 auf. In diesem Ausführungsbeispiel sind die Ansaugöffnungen 936 rund ausgestaltet und sind in zwei in Umfangsrichtung angeordneten Reihen mit äquidistanten Ansaugöffnungen 936 verteilt. Auch andere Anordnungen der Ansaugöffnungen 936 sind jedoch selbstverständlich möglich.

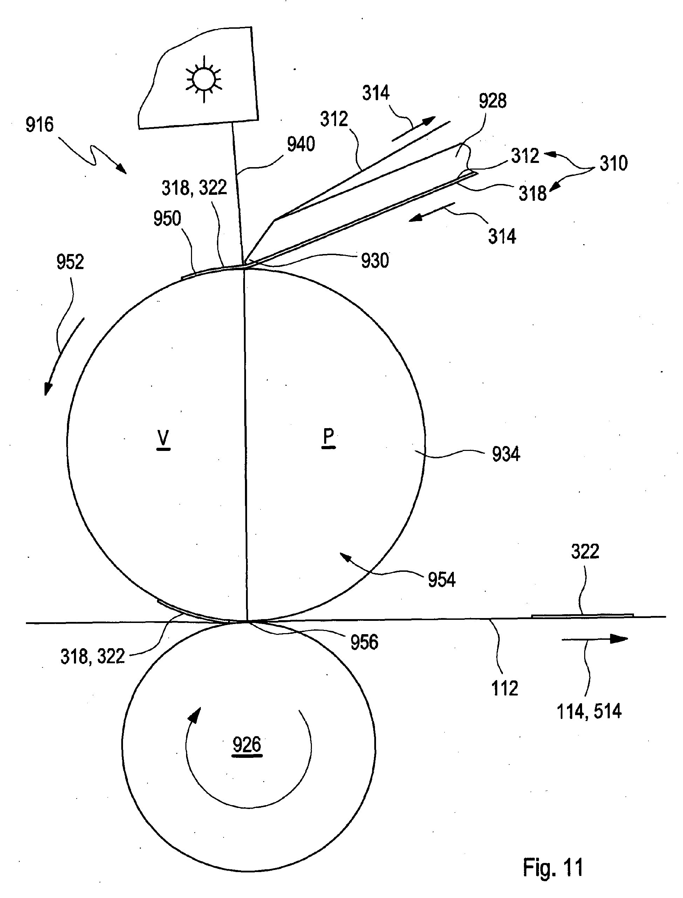

Weiterhin weist die Vorrichtung in den Figuren 9 und 10 eine Schneidvorrichtung 938 auf. Diese Schneidvorrichtung 938 ist in diesem Ausführungsbeispiel als Laserschneidvorrichtung ausgestaltet und umfasst einen CO₂-Laser, welcher einen Laserstrahl 940 erzeugt. Dieser Laserstrahl 940 ist in den Figuren 9 und 10 lediglich symbolisch angedeutet und ist derart ausgestaltet, dass dieser im Bereich der Spitze der Schneidkanten 930 auf die diagnostischen Hilfsetiketten 322 trifft. Die exakte Funktionsweise wird unten anhand Figur 11 näher erläutert.

Weiterhin weist die Vorrichtung 910 gemäß den Figuren 9 und 10 in diesem Ausführungsbeispiel eine Abzugsvorrichtung 942 auf, welche in diesem Ausführungsbeispiel als Absaugvorrichtung 944 ausgestaltet ist. Diese Absaugvorrichtung 944 weist einen Absaugstutzen 946 auf, dessen Öffnung in unmittelbarer Nähe zu dem Bereich angeordnet ist, in welchem der Laserstrahl 940, die Spitze 930 der Schneidkante 928 und die Oberfläche der Vakuumwalzen 934 zusammentreffen. Der Absaugstutzen 946 ist mit einem Querschnitt ausgestattet, welcher ausreichend ist, um die diagnostische Funktionsschicht 318 anzusaugen.

Lediglich symbolisch angedeutet ist in Figur 10 eine Detektionsvorrichtung 948, welche beispielsweise eine optische Detektionsvorrichtung umfasst und welche eingerichtet ist, um Fehlermarkierungen auf dem Laminatband 310, welches der Schneidkante 928 zugeführt wird, zu erkennen. Beispielsweise kann es sich bei diesen Fehlermarkierungen, wie eingangs ausgeführt, um Farbmarkierungen (beispielsweise separat aufgedruckte Fehlermarken und/oder gezielt herbeigeführte Verfärbungen in der Testchemie 122) handeln, welche beispielsweise durch eine Kamera und/oder eine andere Art der Detektionsvorrichtung 948 detektiert werden können. Die Detektionsvorrichtung 948 kann dann genutzt werden, um beispielsweise direkt oder indirekt die Abzugsvorrichtung 942 auszulösen. Auf diese Weise können als fehlerhaft markierte und von der Detektionsvorrichtung 948 als solche erkannte Abschnitte der diagnostischen Funktionsschicht 318 abgesaugt werden, bevor diese auf das Trägerband 112 aufetikettiert werden.

Zur Erzeugung von Fehlermarkierungen können entweder in der in den Figuren 9 und 10 dargestellten Vorrichtung 910 eine entsprechende Fehlererkennungsvorrichtung und/oder eine Fehlermarkierungsvorrichtung vorgesehen sein, oder es kann, alternativ oder zusätzlich, die Fehlermarkierung auch in einem separaten Herstellungsprozess des Laminatbandes 310 erfolgen. So kann beispielsweise auf den Gutwickel 914 bereits ein Laminatband 310 aufgebracht werden, welches derartige Fehlermarkierungen umfasst. So kann beispielsweise eine separate Herstellungsvorrichtung für das Laminatband 310 eine Fehlererkennungsvorrichtung und/oder eine Fehlermarkierungsvorrichtung zur Erzeugung von Fehlermarkierungen aufweisen. Beispielsweise können auf optische Weise die Laminatbänder während und/oder nach der Herstellung kontrolliert und markiert werden. Beispielsweise können die Streifen der Testchemie 122 optisch auf korrekte Farbe und/oder Form überprüft werden. Auch andere Arten der Fehlerüberprüfung sind möglich.

Um das Funktionsprinzip der in den Figuren 9 und 10 dargestellten Vorrichtung 910 näher zu erläutern, wird auf die Prinzipskizze in Figur 11 verwiesen. In dieser Prinzipskizze ist lediglich die Etikettiereinrichtung 916 dargestellt, welche die Schneidkante 928, die Vakuumwalze 934 und die Auftragswalze 926 umfasst. Von der, ebenfalls der Etikettiereinrichtung 916 zuzurechnenden, Schneidvorrichtung 938 ist lediglich der Laserstrahl 940 dargestellt.

Wie in Figur 11 zu erkennen ist, wird das Laminatband 310 der Spitze 930 der Schneidkante 928 zugeführt. Durch die scharfe Umlenkung des Laminatbandes 310 an dieser Spitze 930 wird ein freies Ende 950 der diagnostischen Funktionsschicht 318 vom Laminatträgerband 312 abgehoben und von der Vakuumwalze 934 angesaugt. Durch entsprechendes Triggern der Schneidvorrichtung 938 wird in einem genau definierten Abstand von diesem freien Ende 950 der diagnostischen Funktionsschicht 318 ein Schnitt gesetzt, sodass ein diagnostisches Hilfsetikett 322 entsteht. Dieses diagnostische Funktionsetikett wird durch eine Rotation 952 der Vakuumwalze hin zum Trägerband 112 befördert. Vorzugsweise sind die Antriebe des Trägerbandes 112, des Laminatbandes 310 und der Vakuumwalze 934 derart synchronisiert, dass genau ein diagnostisches Hilfsetikett 322 gleichzeitig auf der Oberfläche der Vakuumwalzen 934 aufgebracht ist.

Die Vakuumwalze 934 weist eine Drucksteuereinrichtung 954 auf, welche in Figur 11 symbolisch durch die Bezeichnung "V" und "P" dargestellt ist. Diese Drucksteuereinrichtung 954 steuert den Druck an den Ansaugöffnungen 936 und beaufschlagt diese abwechselnd mit Unterdruck und Überdruck. Dabei ist die Drucksteuerung durch die Drucksteuereinrichtung 954 derart ausgestaltet, dass die diagnostischen Hilfsetiketten 322 ab dem Auftrag im Bereich der Spitze 930 der Schneidkante 928 angesaugt werden und in diesem Zustand gehalten werden, bis diese einen Walzenspalt 956 zwischen Auftragswalze 926 und Vakuumwalze 934 erreichen, an welcher Stelle der Auftrag der diagnostischen Hilfsetiketten 322 auf das Trägerband 112 folgt. Dort erfolgt durch die Drucksteuereinrichtung 954 eine Druckumkehr, und die Ansaugöffnungen 936 werden mit einem Überdruck beaufschlagt, um die diagnostischen Hilfsetiketten 322 freizugeben.

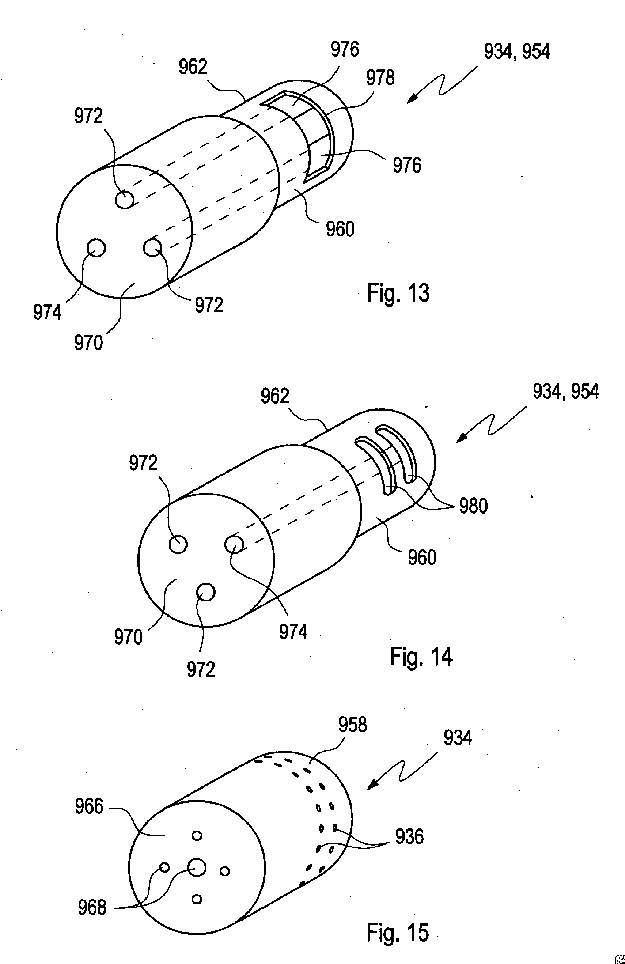

Mögliche Ausgestaltungen der Vakuumwalze 934 und der Drucksteuereinrichtung 954 lassen sich den bereits zitierten Schriften WO 99/03738 und US 6,206,071 B1 entnehmen. In den Figuren 13-15 ist ein weiteres Ausführungsbeispiel einer Vakuumwalze 934 dargestellt, anhand dessen ein mögliches Funktionsprinzip der Druckumkehr erläutert werden soll.

Aus den Figuren 13-15 ist ersichtlich, dass die Vakuumwalze zwei wesentliche Teile aufweist: neben der Drucksteuerreinrichtung 954, welche in den Figuren 13 und 14 in verschiedenen Darstellungen gezeigt ist, weist diese ein Außenteil 958 auf. Die Drucksteuerreinrichtung 954 umfasst ein feststehendes Innenteil 960, welches in der Vorrichtung 910 nicht mit rotiert, sondern ort- und drehfest angeordnet ist. Das Innenteil 960 ist im Wesentlichen zylinderförmig ausgestaltet mit einer Verjüngung 962, auf welche (in den Figuren 13 und 14 von rechts her) das Außenteil 958 aufgeschoben wird. Das Außenteil 958 ist ebenfalls zylinderförmig ausgestaltet, ist jedoch als Hohlzylinder ausgebildet und weist an seinem rechten Ende in Figur 15 (in der Darstellung nicht zu erkennen) eine Öffnung auf, welche derart dimensioniert ist, dass diese passgenau mit dem Außenumfang der Verjüngung 962 des Innenteils 960 zusammenpasst. Das Außenteil 958 ist an einer (nicht dargestellten) angetriebenen Welle befestigt, so dass dieses über einen Vakuumwalzenantrieb (in Figur 9 symbolisch mit der Bezugsziffer 964 bezeichnet) angetrieben werden kann. An seiner Stirnseite 966 ist das Außenteil 958 geschlossen, weist jedoch Öffnungen 968 auf, welche beispielsweise der Druckentlastung beim Einschieben des Innenteils 960 und/oder der Fixierung der angetriebenen Welle dienen. Ebenfalls zu erkennen in Figur 15 sind die Ansaugöffnungen 936, welche, wie bereits dargestellt, in diesem Ausführungsbeispiel in zwei in Umfangsrichtung verlaufenden Reihen angeordnet sind.

In den Figuren 13 und 14 ist das Innenteil 960 in verschiedenen perspektivischen Darstellungen gezeigt. Diese Darstellungen unterscheiden sich dadurch voneinander, dass das Innenteil 960 in Figur 14 im Vergleich zu Figur 13 um 180° um seine Längsachse gedreht ist. In beiden Fällen ist zu erkennen, dass das Innenteil 960 an seiner von der Verjüngung 962 abgewandten Stirnseite 970, welche im zusammengebauten Zustand nicht in das Außenteil 958 eingeschoben ist, in diesem Fall drei Anschlussbohrungen 972, 974 aufweist. Hiervon sind zwei Anschlussbohrungen 972 als Vakuum-Anschlussbohrungen ausgestaltet, wohingegen in diesem Ausführungsbeispiel eine Anschlussbohrung 974 als Druckluft-Anschlussbohrung konzipiert ist. Die Anschlussbohrungen 972, 974 werden dementsprechend, beispielsweise über entsprechend flexible oder starre Leitungen, mit Vakuum bzw. Druckluft beaufschlagt. Anstelle von Druckluft könnte evt. auch beispielsweise einfach ein Normaldruck angelegt werden (z.B. in dem die Anschlussbohrung 974 einfach geöffnet wird), oder es könnte ein anderes Druckgas angelegt werden, beispielsweise Reinstluft oder ein Inertgas, wie beispielsweise Argon oder Stickstoff.

Die Vakuum-Anschlussbohrungen 972 sind mit umfangsseitig im Bereich der Verjüngung 962 angeordneten Vakuumöffungen 976 verbunden. In diesem Ausführungsbeispiel sind zwei in Umfangsrichtung aneinandergereihte Vakuumöffungen vorgesehen, welche jeweils mit einer der Anschlussbohrungen 972 verbunden sind. Die Vakuumöffnungen 976 sind mit einer gemeinsamen Vertiefung 978 verbunden, welche derart dimensioniert ist, dass die Ansaugöffnungen 936 in diesem Bereich mit Vakuum beaufschlagt werden können. Der Umfangsbereich, über welchen sich die Vertiefung 978 erstreckt, bestimmt somit den Winkelbereich bzw. Umfangsbereich, innerhalb dessen die Ansaugöffnungen 936 mit Vakuum beaufschlagt sind.

Die Druckluft-Anschlussbohrung 974 ist mit zwei Druckluftöffnungen 980 verbunden, welche der Vertiefung 978 beispielsweise diametral gegenüber liegen können. Diese Druckluftöffnungen 980 sind in diesem Ausführungsbeispiel als umfangsseitige Langlöcher ausgebildet, welche wiederum derart positioniert sind, dass diese sich teilweise mit den Ansaugöffnungen 936 decken. Die umfangsseitige Erstreckung dieser Langlöcher der Druckluftöffnungen 980 bestimmt somit den Winkelbereich, über welchen die Ansaugöffnungen 936 mit Druckluft beaufschlagt werden.

Durch den Vakuumwalzenantrieb 964 wird das Außenteil 958 in Rotation versetzt. Hierdurch geraten, da das Innenteil 960 fest steht, nacheinander verschiedene Ansaugöffnungen 936 über die Vertiefung 978 bzw. die Druckluftöffnungen 980. Ortsfest betrachtet, sind Vakuumbeaufschlagung und Druckluftbeaufschlagung stets in den selben Winkelstellungsbereichen angeordnet, sodass die Ansaugung der diagnostischen Hilfsetiketten 322 und deren Abgabe stets in der selben Winkelstellung erfolgt. So kann beispielsweise die Vertiefung 978 im Wesentlichen den in Figur 11 mit "V" bezeichneten Bereich der Vakuumwalze 934 entsprechen, wohingegen der Umfangsbereich der Druckluftöffnungen 980 im Wesentlichen dem in Figur 11 mit "P" bezeichneten Bereich entsprechen kann, wobei naturgemäß zwischen diesen Bereichen "V" der Ansaugung und "P" der Druckbeaufschlagung jeweils Zwischenbereiche liegen können, in welchen die Ansaugöffnungen 936 weder mit Vakuum noch mit Druckluft beaufschlagt sind. Selbstverständlich sind auch andere Ausgestaltungen der Vakuumöffnungen 976, der Vertiefung 978 und der Druckluftöffnungen 980 denkbar.

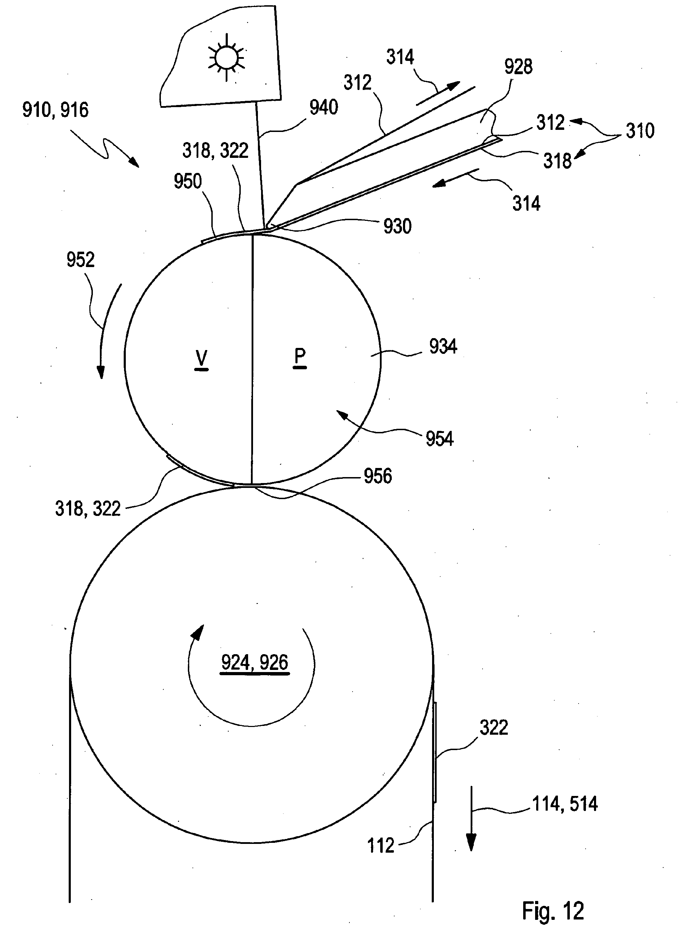

In Figur 12 ist schließlich eine Vorrichtung 910 (hiervon nur wiederum die Etikettiereinrichtung 916) in Detaildarstellung gezeigt, wobei diese Detaildarstellung der Prinzipskizze in Figur 11 entspricht. Diese alternative Ausführungsform entspricht im Wesentlichen der Ausführung gemäß Figur 11, sodass weitgehend auf die obige Beschreibung verwiesen werden kann. Unterschiede ergeben sich jedoch in der Führung des Trägerbandes 112. Während in Figur 11 die Auftragswalze 926 klein dimensioniert ist (beispielsweise kleiner als die Vakuumwalze 934) und während das Trägerband 112 im Wesentlichen ohne Umlenkung durch den Walzenspalt 956 geführt wird, ist die Auftragswalze 926 in der Ausführungsform gemäß Figur 12 als Umlenkwalze konzipiert und ist erheblich größer als in Figur 11 ausgestaltet, insbesondere erheblich größer als die Vakuumwalze 934. Das Trägerband wird in diesem Ausführungsbeispiel durch die Auftragswalze 926 um nahezu 180° umgelenkt, so dass dieses in einem großen Umfangsbereich in Berührung mit der Auftragswalze 926 kommt. Die Auftragswalze 926 kann somit nicht nur zur Erzeugung eines Gegendrucks zur Vakuumwalze 934 genutzt werden, sondern auch zum Antrieb des Trägerbandes 112. Zu diesem Zweck kann die Auftragswalze 926 mit einem Trägerantrieb 924 verbunden sein und somit als angetriebene Auftragswalze ausgestaltet sein. Diese Ausgestaltung hat den Vorteil, dass der Antrieb des Trägerbandes 112 in unmittelbare Nähe zur Auftragsstelle der diagnostischen Hilfsetiketten 322 (welche näherungsweise im Walzenspalt 956 angeordnet ist) verlegt wird. Hierdurch kann die Präzision der Auftragung der diagnostischen Hilfsetiketten 322 erheblich gesteigert werden, wodurch wiederum die Durchlaufgeschwindigkeit des Trägerbandes 112 erhöht werden kann. Zur Verbesserung der Haftung des Trägerbandes 112 auf der Auftragswalze 926 kann das Trägerband zusätzlich elektrostatisch aufgeladen werden, was die Präzision des Trägerantriebs 924 und die Führung des Trägerbandes 112 weiter verbessert.

Nicht dargestellt in den Figuren ist eine weitere Schneidvorrichtung, welche optional vorgesehen sein kann, um das Trägerband nach dem Auftragen der diagnostischen Hilfsetiketten 322 in Teilbänder zu zerschneiden. Weiterhin sei darauf hingewiesen, dass die in den Figuren dargestellte Vorrichtung 910 in einer der beschriebenen Ausführungsformen durch zusätzliche Vorrichtungen erweitert werden kann. So können anstelle der Auftragung eines einzelnen diagnostischen Hilfsetiketts 322 durch eine einzelne Etikettiervorrichtung 916 weitere Etikettiervorrichtungen 916 vorgesehen sein, wobei beispielsweise unterschiedliche Arten diagnostischer Hilfsetiketten 322 mit beispielsweise unterschiedlichen Arten diagnostischer Hilfsmittel 118 aufgebracht werden können. So kann beispielsweise eine Etikettiereinrichtung 916 vorgesehen sein, in welcher diagnostische Hilfsetiketten 322 mit Lanzetten 612 aufgebracht werden, und eine anschließende Etikettiereinrichtung 916, in welcher diagnostische Hilfsetiketten 322 mit Testfeldern 116 aufgetragen werden. Auch weitere Element können auf das Trägerband 112 aufgebracht werden, beispielsweise Deckschichten, Markierungen oder ähnliches.

### Bezugszeichenliste

- 110: Analyseband
- 112: Trägerband
- 114: Transportrichtung
- 116: Testfeld
- 118: diagnostisches Hilfsmittel
- 120: Klebeschicht
- 122: Testchemie
- 124: Decklage
- 126: Imprägnierung
- 128: zentrale Nachweiszone

- 210: Blutzucker-Testgerät
- 212: Bandkassette
- 214: Gutwickel
- 216: Messkopf
- 218: Schlechtwickel

- 310: Laminatband
- 312: Laminatträgerband
- 314: Laufrichtung
- 316: Randbereiche
- 318: diagnostische Funktionsschicht
- 320: Schnittlinien
- 322: diagnostische Hilfsetiketten

- 510: Positionierungsmarken
- 512: Referenzmarken
- 514: Laufrichtung
- 516: Schnittlinien
- 518: Teilbänder

- 610: Lanzettenpackung
- 612: Lanzette
- 614: Tasche
- 616: Bodenfolie
- 618: Deckfolie
- 620: erweiterter Taschenbereich
- 622: Lanzettenspitze
- 624: proximaler Schaftabschnitt

- 910: Vorrichtung zur Herstellung Analyseband
- 912: Gehäuse
- 914: Laminatband-Gutwickel
- 916: Etikettiereinrichtung
- 918: Laminatband-Schlechtwickel
- 920: Laminatantrieb
- 922: Umlenkrollen
- 924: Trägerantrieb
- 926: Auftragswalze
- 928: Schneidkante
- 930: Spitze der Schneidkante
- 932: Anpresswalze
- 934: Vakuumwalze
- 936: Ansaugöffnungen
- 938: Schneidvorrichtung
- 940: Laserstrahl
- 942: Abzugsvorrichtung
- 944: Absaugvorrichtung
- 946: Absaugstutzen
- 948: Detektionsvorrichtung
- 950: freies Ende der diagnostischen Funktionseinheit
- 952: Rotation der Vakuumwalze
- 954: Drucksteuereinrichtung
- 956: Walzenspalt
- 958: Außenteil
- 960: Innenteil
- 962: Verjüngung
- 964: Vakuumwalzenantrieb
- 966: Stirnseite
- 968: Öffnungen
- 970: Stirnseite
- 972: Anschlussbohrungen Vakuum
- 974: Anschlussbohrungen Druckluft
- 976: Vakuumöffnungen
- 978: Vertiefung
- 980: Druckluftöffnungen

## Patentansprüche

1. Verfahren zur Herstellung eines Analysebandes (110) für Flüssigkeitsproben, insbesondere Körperflüssigkeiten, wobei das Verfahren folgende Schritte umfasst:
- ein Laminatband (310) mit einem Laminatträgerband (312) und mindestens einer diagnostischen Funktionsschicht (318) wird derart geschnitten, dass ein diagnostisches Hilfsetikett (322) entsteht;
- das diagnostische Hilfsetikett (322) wird auf eine Vakuumwalze (934) übertragen; und
- das diagnostische Hilfsetikett (322) wird auf ein Trägerband (112) übertragen, wobei für die Übertragung des diagnostischen Hilfsetiketts (322) auf das Trägerband (112) mindestens die Vakuumwalze (934) verwendet wird, wobei
die diagnostische Funktionsschicht (318) mit Fehlermarkierungen zur Markierung fehlerhafter Abschnitte der diagnostischen Funktionsschicht (318) versehen wird, wobei die als fehlerhaft markierten Abschnitte vor oder nach dem Aufbringen auf die Vakuumwalze (934) entfernt werden, wobei das Entfernen der als fehlerhaft markierten Abschnitte durch eine Absaugung erfolgt.

2. Verfahren nach dem vorhergehenden Anspruch, wobei das diagnostische Hilfsetikett (322) mindestens eines der folgenden diagnostischen Hilfsmittel (118) umfasst: ein diagnostisches Testfeld (116) mit einer Testchemie (122), welche eingerichtet ist, um einen oder mehrere Analyte in der Flüssigkeitsprobe nachzuweisen; eine Lanzette (612), welche eingerichtet ist, um zur Erzeugung einer Flüssigkeitsprobe eine Hautpartie eines Patienten zu perforieren.

3. Verfahren nach dem vorhergehenden Anspruch, wobei das Analyseband (110) alternierend Lanzetten (612) und diagnostische Testfelder (116) umfasst.

4. Verfahren nach einem der vorhergehenden Ansprüche, wobei das Laminatband (310), das Trägerband (112) und die Vakuumwalze (934) durch Antriebe (920, 924, 964) angetrieben werden, wobei die Antriebe (920, 924, 964) ganz oder teilweise synchronisiert sind.

5. Verfahren nach dem vorhergehenden Anspruch, wobei weiterhin eine für das Schneiden der diagnostischen Funktionsschicht (318) verwendete Schneidvorrichtung (938) mit den Antrieben (920, 924, 964) synchronisiert wird.

6. Verfahren nach einem der vorhergehenden Ansprüche, wobei das Trägerband (112) am Ort der Übertragung des diagnostischen Hilfsetiketts (322) über eine Auftragswalze (926) geführt wird, wobei das Trägerband (112) durch einen Walzenspalt (956) zwischen der Auftragswalze (926) und der Vakuumwalze (934) geführt wird.

7. Verfahren nach den beiden vorhergehenden Ansprüchen, wobei die Auftragswalze (926) ein Teil des Antriebs (924) des Trägerbandes (112) ist.

8. Verfahren nach einem der vorhergehenden Ansprüche, wobei das Schneiden der diagnostischen Funktionsschicht (318) mit einem Laser, insbesondere mit einem CO₂-Laser, erfolgt.

9. Verfahren nach einem der vorhergehenden Ansprüche, wobei das Schneiden der diagnostischen Funktionsschicht (318) derart erfolgt, dass ein freies Ende (950) der diagnostischen Funktionsschicht (318) durch Führen des Laminatträgerbandes (312) um eine Schneidkante (928) mit kleinem Radius vom Laminatträgerband (312) abgehoben wird, wobei die diagnostische Funktionsschicht (318) in einem vorgegebenen Abstand von dem abgehobenen freien Ende (950) mittels einer Schneidvorrichtung (938) geschnitten wird.

10. Verfahren nach dem vorhergehenden Anspruch, wobei das abgehobene freie Ende (950) der diagnostischen Funktionsschicht (318) auf die Vakuumwalze (934) aufgebracht wird.

11. Verfahren nach einem der beiden vorhergehenden Ansprüche, wobei das Schneiden durch die Schneidvorrichtung (938) im Bereich der Schneidkante (928) erfolgt.

12. Verfahren nach einem der vorhergehenden Ansprüche, wobei das Schneiden der diagnostischen Funktionsschicht (318) derart erfolgt, dass die diagnostische Funktionsschicht (318) im Wesentlichen verlustfrei in diagnostische Hilfsetiketten (322) umgewandelt wird.

13. Verfahren nach einem der vorhergehenden Ansprüche, wobei das Laminatträgerband (312) und/oder das Trägerband (112) elektrostatisch aufgeladen werden.

14. Verfahren nach einem der vorhergehenden Ansprüche, wobei jeweils genau ein diagnostisches Hilfsetikett (322) gleichzeitig auf der Vakuumwalze (934) aufgebracht ist.

15. Verfahren nach einem der vorhergehenden Ansprüche, wobei die Absaugung im Bereich der Vakuumwalze (934) erfolgt.

16. Verfahren nach einem der vorhergehenden Ansprüche, wobei die diagnostische Funktionsschicht (318) mehrere parallel in einer Laufrichtung (314) des Laminatbandes (310) angeordnete Bahnen diagnostischer Hilfsmittel (118) aufweist, so dass das beim Schneiden der diagnostischen Funktionsschicht (318) entstehende diagnostische Hilfsetikett (322) mehrere diagnostische Hilfsmittel (118) aufweist.

17. Verfahren nach dem vorhergehenden Anspruch, wobei das Trägerband (112) nach dem Aufbringen der diagnostischen Hilfsetiketten (322) parallel zu einer Laufrichtung in Teilbänder geschnitten wird.

18. Verfahren nach einem der vorhergehenden Ansprüche, wobei das Trägerband (112) Referenzmarken (512) für eine optische Kalibrierung aufweist.

19. Verfahren nach einem der vorhergehenden Ansprüche, wobei das Trägerband (112) weiterhin Positionierungsmarken (510) aufweist.

20. Vorrichtung (910) zur Herstellung eines Analysebandes (110) für Flüssigkeitsproben, insbesondere Körperflüssigkeiten, insbesondere unter Verwendung eines Verfahrens nach einem der vorhergehenden Ansprüche, wobei die Vorrichtung (910) einen Laminatantrieb (920) für eine Zufuhr eines Laminatbandes (310) mit einem Laminatträgerband (312) und mindestens einer diagnostischen Funktionsschicht (318) zu einer Etikettiereinrichtung (916) umfasst, wobei die Vorrichtung (910) weiterhin eine Schneidvorrichtung (938) zum Schneiden des Laminatbandes (310) aufweist, wobei die Schneidvorrichtung (938) eingerichtet ist, um die diagnostische Funktionsschicht (318) derart zu schneiden, dass ein diagnostisches Hilfsetikett (322) entsteht, wobei die Vorrichtung (910) weiterhin mindestens eine Vakuumwalze (934) aufweist, wobei die Vorrichtung (910) eingerichtet ist, um das diagnostische Hilfsetikett (322) auf die Vakuumwalze (934) zu übertragen, wobei die Vorrichtung (910) weiterhin einen Trägerantrieb (924) für die Zufuhr eines Trägerbandes (112) zu der Etikettiereinrichtung (916) umfasst, wobei der Trägerantrieb (924) und die Vakuumwalze (934) eingerichtet sind, um derart zusammenzuwirken, dass das diagnostische Hilfsetikett (322) von der Vakuumwalze (934) auf das Trägerband (112) übertragen wird, **dadurch gekennzeichnet, dass** die Vorrichtung (910) weiterhin eine Abzugsvorrichtung (942), insbesondere eine Absaugvorrichtung (944), aufweist, zum Entfernen und Entsorgen von fehlerhaften Abschnitten der diagnostischen Funktionsschicht (318) vor oder nach dem Aufbringen auf die Vakuumwalze (934).

21. Vorrichtung (910) nach dem vorhergehenden Anspruch, wobei der Laminatantrieb (920), der Trägerantrieb (924) und ein Vakuumwalzenantrieb (964) zum Antreiben der Vakuumwalze (934) synchronisiert sind.

22. Vorrichtung (910) nach einem der beiden vorhergehenden Ansprüche, wobei die Schneidvorrichtung (938) einen Laser, insbesondere einen CO₂-Laser, aufweist.

23. Vorrichtung (910) nach einem der vorhergehenden Vorrichtungsansprüche, wobei die Vorrichtung (910) weiterhin eine Fehlererkennungsvorrichtung zur Erkennung fehlerhafter Anschnitte der diagnostischen Funktionsschicht (318) und/oder des Laminatbandes (310) aufweist.

24. Vorrichtung (910) nach einem der vorhergehenden Vorrichtungsansprüche, wobei die Vorrichtung (910) weiterhin eine Fehlerermarkierungsvorrichtung zur Markierung fehlerhafter Anschnitte der diagnostischen Funktionsschicht (318) und/oder des Laminatbandes (310) aufweist.

25. Vorrichtung (910) nach einem der vorhergehenden Vorrichtungsansprüche, wobei die Vorrichtung (910) weiterhin im Bereich der Etikettiereinrichtung (916) eine Detektionsvorrichtung (948) zur Erkennung von als fehlerhaft markierten Anschnitten der diagnostischen Funktionsschicht (318) und/oder des Laminatbandes (310) aufweist.

## Claims

1. Method for producing an analysis tape (110) for fluid samples, in particular body fluids, wherein the method comprises the following steps:
- a laminate tape (310) having a laminate carrier tape (312) and at least one diagnostic functional layer (318) is cut in such a way that a diagnostic auxiliary label (322) arises;
- the diagnostic auxiliary label (322) is transferred to a vacuum roller (934); and
- the diagnostic auxiliary label (322) is transferred to a carrier tape (112),
- wherein at least the vacuum roller (934) is used for the transfer of the diagnostic auxiliary label (322) to the carrier tape (112), wherein the diagnostic functional layer (318) is provided with defect markings for marking defective sections of the diagnostic functional layer (318), wherein the sections marked as defective are removed before or after application to the vacuum roller (934), wherein the removal of the sections marked as defective is effected by extraction by suction.

2. Method according to the preceding claim, wherein the diagnostic auxiliary label (322) comprises at least one of the following diagnostic aids (118): a diagnostic test field (116) with a test chemical (122) designed to detect one or more analytes in the fluid sample; a lancet (612) designed to perforate part of a patient's skin in order to generate a fluid sample.

3. Method according to the preceding claim, wherein the analysis tape (110) alternately comprises lancets (612) and diagnostic test fields (116).

4. Method according to any of the preceding claims, wherein the laminate tape (310), the carrier tape (112) and the vacuum roller (934) are driven by drives (920, 924, 964) wherein the drives (920, 924, 964) are synchronized wholly or in part.

5. The method according to the preceding claim, wherein a cutting device (938) used for cutting the diagnostic functional layer (318) is furthermore synchronized with the drives (920, 924, 964).

6. Method according to any of the preceding claims, wherein the carrier tape (112) is guided by means of an application roller (926) at the location where the diagnostic auxiliary label (322) is transferred, wherein the carrier tape (112) is guided through a roller gap (956) between the application roller (926) and the vacuum roller (934).

7. Method according to the two preceding claims, wherein the application roller (926) is a part of the drive (924) of the carrier tape (112).

8. Method according to any of the preceding claims, wherein the cutting of the diagnostic functional layer (318) is effected using a laser, in particular using a CO₂ laser.

9. Method according to any of the preceding claims, wherein the cutting of the diagnostic functional layer (318) is effected in such a way that a free end (950) of the diagnostic functional layer (318) is lifted off from the laminate carrier tape (312) by guiding the laminate carrier tape (312) around a cutting edge (928) with a small radius, wherein the diagnostic functional layer (318) is cut at a predetermined distance from the lifted-off free end (950) by means of a cutting device (938).

10. Method according to any of the preceding claims, wherein the lifted-off free end (950) of the diagnostic functional layer (318) is applied to the vacuum roller (934).

11. Method according to either of the two preceding claims, wherein the cutting is effected by the cutting device (938) in the region of the cutting edge (928).

12. Method according to any of the preceding claims, wherein the cutting of the diagnostic functional layer (318) is effected in such a way that the diagnostic functional layer (318) is converted into diagnostic auxiliary labels (322) in a manner substantially free of losses.

13. Method according to any of the preceding claims, wherein the laminate carrier tape (312) and/or the carrier tape (112) are charged electrostatically.

14. Method according to any of the preceding claims, wherein in each case exactly one diagnostic auxiliary label (322) is applied simultaneously on the vacuum roller (934).

15. Method according to any of the preceding claims, wherein the extraction by suction is effected in the region of the vacuum roller (934).

16. Method according to any of the preceding claims, wherein the diagnostic functional layer (318) has a plurality of tracks of diagnostic aids (118) that are arranged parallel in a running direction (314) of the laminate tape (310), such that the diagnostic auxiliary label (322) that arises when the diagnostic functional layer (318) is cut has a plurality of diagnostic aids (118).

17. Method according to the preceding claim, wherein the carrier tape (112) is cut into sub-tapes parallel to a running direction after the application of the diagnostic auxiliary labels (322).

18. Method according to any of the preceding claims, wherein the carrier tape (112) has reference marks (512) for an optical calibration.

19. Method according to any of the preceding claims, wherein the carrier tape (112) furthermore has positioning marks (510).

20. Device (910) for producing an analysis tape (110) for fluid samples, in particular body fluids, in particular using a method according to any of the preceding claims, wherein the device (910) comprises a laminate drive (920) for supplying a laminate tape (310) having a laminate carrier tape (312) and at least one diagnostic functional layer (318) to a labeling device (916), wherein the device (910) furthermore has a cutting device (938) for cutting the laminate tape (310), wherein the cutting device (938) is designed to cut the diagnostic functional layer (318) in such a way that a diagnostic auxiliary label (322) arises, wherein the device (910) furthermore has at least one vacuum roller (934), wherein the device (910) is designed to transfer the diagnostic auxiliary label (322) to the vacuum roller (934), wherein the device (910) furthermore comprises a carrier drive (924) for supplying a carrier tape (112) to the labeling device (916), wherein the carrier drive (924) and the vacuum roller (934) are designed to interact in such a way that the diagnostic auxiliary label (322) is transferred from the vacuum roller (934) to the carrier tape (112), **characterized in that** the device (910) furthermore has a withdrawal device (942), in particular an extraction device (944) using suction, for removing defective sections of the diagnostic functional layer (318) before or after application to the vacuum roller (934).

21. Device (910) according to the preceding claim, wherein the laminate drive (920), the carrier drive (924) and a vacuum roller drive (964) for driving the vacuum roller (934) are synchronized.

22. Device (910) according to either of the two preceding claims, wherein the cutting device (938) has a laser, in particular a CO₂ laser.

23. Device (910) according to any of the preceding device claims, wherein the device (910) furthermore has a defect identification device for identifying defective incipient cuts of the diagnostic functional layer (318) and/or of the laminate tape (310).

24. Device (910) according to any of the preceding device claims, wherein the device (910) furthermore has a defect marking device for marking defective incipient cuts of the diagnostic functional layer (318) and/or of the laminate tape (310).

25. Device (910) according to any of the preceding device claims, wherein the device (910) furthermore has, in the region of the labeling device (916), a detection device (948) for identifying incipient cuts of the diagnostic functional layer (318) and/or of the laminate tape (310) which have been marked as defective.

## Revendications

1. Procédé de fabrication d'un ruban d'analyse (110) pour échantillons de liquide, en particulier des liquides corporels, le procédé comprenant les étapes suivantes :
- un ruban de laminé (310) comprenant un ruban porteur de laminé (312) et au moins une couche fonctionnelle diagnostique (318) est découpé de telle sorte qu'il en résulte une étiquette de ressource diagnostique (322) ;
- l'étiquette de ressource diagnostique (322) est reportée sur un rouleau sous vide (934) ; et
- l'étiquette de ressource diagnostique (322) est reportée sur un ruban porteur (112) au moins le rouleau sous vide (934) étant utilisé pour le report de l'étiquette de ressource diagnostique (322) sur le ruban porteur (112), la couche fonctionnelle diagnostique (318) étant munie de marquages d'erreur pour marquer les sections défectueuses de la couche fonctionnelle diagnostique (318), les sections marquées comme défectueuses étant écartées avant ou après l'application sur le rouleau sous vide (934), les sections marquées comme défectueuses étant écartées par aspiration.

2. Procédé selon la revendication précédente, dans lequel l'étiquette de ressource diagnostique (322) comprend au moins l'un des moyens de ressource diagnostiques (118) suivants : un champ de test diagnostique (116) avec un produit chimique de test (122) qui est conçu pour dépister un ou plusieurs analyte(s) dans l'échantillon de liquide ; une lancette (612) conçue pour perforer une partie de peau d'un patient pour produire un échantillon de liquide.

3. Procédé selon la revendication précédente, dans lequel le ruban d'analyse (110) comprend en alternance des lancettes (612) et des champs de test diagnostiques (116).

4. Procédé selon l'une des revendications précédentes, dans lequel le ruban de laminé (310), le ruban porteur (112) et le rouleau sous vide (934) sont entraînés par des entraînements (920, 924, 964), les entraînements (920, 924, 964) étant totalement ou partiellement synchronisés.

5. Procédé selon la revendication précédente, dans lequel en outre un dispositif de coupe (938) utilisé pour découper la couche fonctionnelle diagnostique (318) est synchronisé avec les entraînements (920, 924, 964).

6. Procédé selon l'une des revendications précédentes, dans lequel le ruban porteur (112) est dirigé sur le lieu du report de l'étiquette de ressource diagnostique (322) par un rouleau d'application (926), le ruban porteur (112) étant dirigé à travers une fente de rouleau (956) entre le rouleau d'application (926) et le rouleau sous vide (934).

7. Procédé selon les deux revendications précédentes, dans lequel le rouleau d'application (926) est une partie de l'entraînement (924) du ruban porteur (112).

8. Procédé selon l'une des revendications précédentes, dans lequel la découpe de la couche fonctionnelle diagnostique (318) s'effectue avec un laser, en particulier avec un laser au CO₂.

9. Procédé selon l'une des revendications précédentes, dans lequel la découpe de la couche fonctionnelle diagnostique (318) s'effectue de sorte qu'une extrémité libre (950) de la couche fonctionnelle diagnostique (318), par le guidage du ruban porteur de laminé (312) autour d'une arête de coupe (928), soit soulevée d'un petit rayon du ruban porteur de laminé (312), la couche fonctionnelle diagnostique (318) étant coupée au moyen d'un dispositif de coupe (938) à une distance prédéfinie de l'extrémité libre (950) soulevée.

10. Procédé selon la revendication précédente, dans lequel l'extrémité libre (950) soulevée de la couche fonctionnelle diagnostique (318) est placée sur le rouleau sous vide (934).

11. Procédé selon l'une des deux revendications précédentes, dans lequel la coupe s'effectue au moyen du dispositif de coupe (938) au niveau de l'arête de coupe (928).

12. Procédé selon l'une des revendications précédentes, dans lequel la coupe de la couche fonctionnelle diagnostique (318) est effectuée de manière à ce que la couche fonctionnelle diagnostique (318) soit convertie essentiellement sans perte en étiquettes de ressource diagnostiques (322).

13. Procédé selon l'une des revendications précédentes, dans lequel le ruban porteur de laminé (312) et/ou le ruban porteur (112) est/sont chargé(s) électrostatiquement.

14. Procédé selon l'une des revendications précédentes, dans lequel précisément une étiquette de ressource diagnostique (322) est placée à chaque fois simultanément sur le rouleau sous vide (934).

15. Procédé selon l'une des revendications précédentes, dans lequel l'aspiration s'effectue au niveau du rouleau sous vide (934).

16. Procédé selon l'une des revendications précédentes, dans lequel la couche fonctionnelle diagnostique (318) présente une pluralité de pistes de moyens de ressource diagnostiques (118) placées en parallèle dans une direction d'avancée (314) du ruban de laminé (310), de façon à ce que lors de la découpe de la couche fonctionnelle diagnostique (318), l'étiquette de ressource diagnostique (322) produite présente une pluralité de moyens de ressource diagnostiques (118).

17. Procédé selon la revendication précédente, dans lequel le ruban porteur (112), après le placement des étiquettes de ressource diagnostiques (322), est découpé en rubans partiels parallèlement à une direction d'avancée.

18. Procédé selon l'une des revendications précédentes, dans lequel le ruban porteur (112) présente des marquages de référence (512) pour un calibrage optique.

19. Procédé selon l'une des revendications précédentes, dans lequel le ruban porteur (112) présente aussi des marquages de positionnement (510).

20. Dispositif (910) pour fabriquer un ruban d'analyse (110) pour échantillons de liquide, en particulier des liquides corporels, en particulier en utilisant un procédé selon l'une des revendications précédentes, le dispositif (910) comprenant un entraînement de laminé (920) pour amener un ruban de laminé (310) avec un ruban porteur de laminé (312) et au moins une couche fonctionnelle diagnostique (318) vers un dispositif d'étiquetage (916), le dispositif (910) présentant en outre un dispositif de coupe (938) pour découper le ruban de laminé (310), le dispositif de coupe (938) étant conçu pour couper la couche fonctionnelle diagnostique (318) de telle sorte qu'il en résulte une étiquette de ressource diagnostique (322), le dispositif (910) présentant en outre au moins un rouleau sous vide (934), le dispositif (910) étant conçu pour reporter l'étiquette de ressource diagnostique (322) sur le rouleau sous vide (934), le dispositif (910) comprenant en outre un entraînement porteur (924) pour amener un ruban porteur (112) vers le dispositif d'étiquetage (916), l'entraînement porteur (924) et le rouleau sous vide (934) étant conçus pour coopérer de manière à ce que l'étiquette de ressource diagnostique (322) soit reportée du rouleau sous vide (934) sur le ruban porteur (112), **caractérisé en ce que** le dispositif (910) présente en outre un dispositif d'enlèvement (942), en particulier un dispositif d'aspiration (944), pour écarter et mettre au rebut des sections défectueuses de la couche fonctionnelle diagnostique (318) avant ou après le placement sur le rouleau sous vide (934).

21. Dispositif (910) selon la revendication précédente, dans lequel l'entraînement de laminé (920), l'entraînement porteur (924) et un entraînement de rouleau sous vide (964) sont synchronisés pour entraîner le rouleau sous vide (934).

22. Dispositif (910) selon l'une des deux revendications précédentes, dans lequel le dispositif de coupe (938) présente un laser, en particulier un laser au CO₂.

23. Dispositif (910) selon l'une des revendications ayant trait au dispositif précédentes, dans lequel le dispositif (910) présente en outre un dispositif de détection d'erreurs pour détecter les sections défectueuses de la couche fonctionnelle diagnostique (318) et/ou du ruban de laminé (310).

24. Dispositif (910) selon l'une des revendications ayant trait au dispositif précédentes, dans lequel le dispositif (910) présente en outre un dispositif de marquage d'erreurs pour marquer les sections défectueuses de la couche fonctionnelle diagnostique (318) et/ou du ruban de laminé (310).

25. Dispositif (910) selon l'une des revendications ayant trait au dispositif précédentes, dans lequel le dispositif (910) présente en outre au niveau du dispositif d'étiquetage (916) un dispositif de détection (948) pour détecter les sections marquées comme défectueuses de la couche fonctionnelle diagnostique (318) et/ou du ruban de laminé (310).
